# EUROPEAN PATENT SPECIFICATION

(11) **EP 4 254 032 B1**
(45) Date of publication and mention of the grant of the patent: **27.08.2025**
(21) Application number: 20966311.1
(22) Date of filing: 22.12.2020
(51) Int. Cl.: G02B 6/38

(54) **FIBER-OPTIC INTERFACE, OPTICAL MODULE AND COMMUNICATION DEVICE**
FASEROPTISCHE SCHNITTSTELLE, OPTISCHES MODUL UND KOMMUNIKATIONSVORRICHTUNG
INTERFACE DE FIBRE-OPTIQUE, MODULE OPTIQUE ET DISPOSITIF DE COMMUNICATION

(43) Date of publication of application: 04.10.2023
(73) Proprietor: Huawei Technologies Co., Ltd., Shenzhen, Guangdong 518129 (CN)
(72) Inventor: YANG, Song, Shenzhen, Guangdong 518129 (CN); WANG, Zhigang, Shenzhen, Guangdong 518129 (CN); DONG, Xiwang, Shenzhen, Guangdong 518129 (CN); XU, Peng, Shenzhen, Guangdong 518129 (CN)
(74) Representative: Körber, Martin Hans
(86) International application number: PCT/CN2020/138326
(87) International publication number: WO 2022/133730

(56) References cited:
- CN-A- 108 241 192
- CN-U- 207 020 342
- US-A1- 2003 123 809
- US-A1- 2014 147 080
- US-A1- 2019 018 205
- US-A1- 2020 096 708
- US-B2- 10 422 966
- US-B2- 9 541 709

## Description

### TECHNICAL FIELD

This application relates to the field of communication device technologies, and in particular, to an optical fiber interface, an optical module, and a communication device.

### BACKGROUND

Currently, networks are inseparable from everyone. Optical fibers are required for network transmission, and there are a plurality of solutions for connecting the optical fibers. An implementation of a solution for connecting an optical fiber to an optical module is to connect an optical fiber patch cable plug to an optical fiber interface of the optical module. For cooperation between the optical fiber patch cable plug and the optical fiber interface, an adaptation structure is required to implement self-locking and unlocking of the patch cable plug and the optical module, to implement insertion and removal of the patch cable plug.

The adaptation structure at the optical fiber interface in a related technology is a deformable hook structure. The hook structure has a hook portion and an unlocking portion. The hook portion is clamped to a slot of the optical fiber patch cable plug, to prevent the optical fiber patch cable plug from being pulled out. The unlocking portion cooperates with an unlocking pull strap on the optical fiber patch cable plug. When the unlocking pull strap is pulled, the unlocking pull strap pushes the unlocking portion up, and the hook structure is pushed up and deformed as a whole. In this way, the hook portion can be disengaged from the slot, and the optical fiber patch cable plug can be smoothly pulled out. In this way, insertion and removal of the optical fiber patch cable plug and the optical fiber interface can be implemented.

However, the hook structure in the related technology is a structure as a whole, and a plurality of structures that are correspondingly disposed on the hook structure also need to be molded at one time, for example, the hook portion and the unlocking portion. In addition, unlocking of the hook structure can be implemented only when the hook structure deforms. Not only clamping strength, but also elastic deformation space and deformation characteristics need to be considered for the hook structure. In this way, the hook structure has a complex shape and structure, is difficult to mold, has high molding costs, and is inconvenient to manufacture and assemble. US 2019/018205 A1 discloses a main body structure with a port that accommodates an optical fiber plug.

### SUMMARY

Embodiments of this application provide an optical fiber interface, an optical module, and a communication device as defined in the appended claims, to resolve problems of inconvenient manufacture and inconvenient assembly.

To achieve the foregoing objectives, the following technical solutions are used in embodiments of this application.

According to a first aspect, an embodiment of this application provides an optical fiber interface, configured to connect to an optical fiber patch cable plug, and including a main body, a cover plate, and a clamping unlocking mechanism. A plug-in port for insertion of an optical fiber patch cable plug is disposed on the main body. The cover plate is disposed on the main body and is fixed to the main body. The clamping unlocking mechanism is disposed between the plug-in port and the cover plate. The clamping unlocking mechanism includes a clamping component and an elastic component. The clamping component is disposed in a radial direction of the plug-in port. When the optical fiber patch cable plug is inserted into the plug-in port, the clamping component is clamped to the optical fiber patch cable plug to prevent the optical fiber patch cable plug from being pulled out. The elastic component is configured to apply elastic force towards the optical fiber patch cable plug to the clamping component, and the elastic force can prevent unlocking of clamping between the clamping component and the optical fiber patch cable plug. In addition, the clamping component is rotatably connected to the main body. When the optical fiber patch cable plug is inserted into the plug-in port, the clamping component may rotate in a direction away from the plug-in port.

According to the optical fiber interface provided in this embodiment of this application, when the optical fiber patch cable plug is inserted into or pulled out from the plug-in port, the elastic component deforms, to facilitate clamping or unlocking of the clamping component and the optical fiber patch cable plug. Because the clamping component and the elastic component are two relatively independent parts, the clamping component does not need to deform, and is manufactured and installed separately from the deformed elastic component, to simplify a structure of a single part, and facilitate molding, manufacturing, and assembly.

In a first possible implementation of the first aspect, the elastic component is disposed on a side that is of the clamping component and that is away from the plug-in port. When the clamping component is clamped to the optical fiber patch cable plug, the elastic component is in a compressed state. The elastic component may be disposed based on an actual situation, as long as retention force towards the optical fiber patch cable plug can be applied to the clamping component. The retention force needs to ensure that the clamping component is subject to force towards the optical fiber patch cable plug. According to a displacement form of the clamping component, the elastic component may be disposed on a side that is of the clamping component and that is away from the plug-in port, to apply the retention force towards the optical fiber patch cable plug to the clamping component. Certainly, if the clamping component may move in a special form, for example, a rotation form, the elastic component may be disposed on a rotating shaft.

The clamping component may move (for example, slide) in the radial direction of the plug-in port, or may be rotatably connected to the main body.

In a third possible implementation of the first aspect, the clamping component includes a first rotating member and a second rotating member that are rotatably connected to the main body. The first rotating member overlaps a side that is of the second rotating member and that is away from the plug-in port. The first rotating member includes a first limiting portion, and the first limiting portion is configured to prevent the optical fiber patch cable plug from being pulled out. The second rotating member is provided with a first tripping protrusion, and the first tripping protrusion abuts against an unlocking pull strap of the optical fiber patch cable plug. When the unlocking pull strap of the optical fiber patch cable plug is pulled, the first tripping protrusion of the second rotating member cooperates with the unlocking pull strap of the optical fiber patch cable plug, so that the second rotating member rotates towards the side away from the plug-in port to push the first rotating member to the side away from the plug-in port, to disengage the first limiting portion from the optical fiber patch cable plug.

In a fourth possible implementation of the first aspect, a rotation axis of the first rotating member and a rotation axis of the second rotating member are parallel. The first rotating member and the second rotating member each are rotatably connected to the main body through an end portion. Another end of the first rotating member and another end of the second rotating member are both free ends. The free end of the first rotating member overlaps a side that is of the free end of the second rotating member and that is away from the plug-in port. The clamping component is rotatably connected to the main body. A rotating member may be disposed separately, or the clamping part and the unlocking part may be disposed separately.

In a fifth possible implementation of the first aspect, the clamping unlocking mechanism includes a first bearing frame disposed in the radial direction of the plug-in port. The first rotating member and the second rotating member are mounted on the first bearing frame. The first bearing frame includes a hollow portion. The first limiting portion of the first rotating member and the first tripping protrusion of the second rotating member are disposed in the hollow portion. The first rotating member and the second rotating member cooperate with the main body through the first bearing frame. The first rotating member and the second rotating member are rotatably connected to the first bearing frame, and the respective functional portions (namely, the first limiting portion of the first rotating member and the first tripping protrusion of the second rotating member) are disposed in the hollow portion, to ensure the cooperation with the optical fiber patch cable plug.

In a sixth possible implementation of the first aspect, a first bearing groove and a second bearing groove are provided on the first bearing frame. A side wall of the first rotating member includes a first bearing protrusion. A side wall of the second rotating member includes a second bearing protrusion. The first bearing protrusion correspondingly extends into the first bearing groove, to limit movement of the first rotating member towards the plug-in port. The second bearing protrusion correspondingly extends into the second bearing groove, to limit movement of the second rotating member towards the plug-in port.

Because the first rotating member and the second rotating member are both rotatably connected to the first bearing frame, and the first bearing frame is provided with a hollow portion, the free end of the first rotating member and the free end of the second rotating member may both completely rotate to the hollow portion. This may cause a stuck situation. Therefore, to prevent the free end of the first rotating member and the free end of the second rotating member from completely rotating to the hollow portion of the first bearing frame, the movement of the first rotating member is limited through cooperation between the first bearing protrusion and the first bearing groove, and the movement of the second rotating member is limited through cooperation between the second bearing protrusion and the second bearing groove.

In a seventh possible implementation of the first aspect, because the free end of the first rotating member overlaps a side that is of the free end of the second rotating member and that is away from the plug-in port, the second rotating member bears the first rotating member. Therefore, as long as the free end of the second rotating member is limited, it can be ensured that the free end of the first rotating member does not rotate to the hollow portion of the first bearing frame. In other words, the second bearing groove may be disposed on the first bearing frame, the side wall of the second rotating member includes the second bearing protrusion, and the second bearing protrusion correspondingly extends into the second bearing groove, to limit movement of the second rotating member towards the plug-in port.

In an eighth possible implementation of the first aspect, there are two first rotating members and two second rotating members. The two first rotating members are disposed abreast, and the two second rotating members are disposed abreast. To ensure that the connection locking between the optical fiber patch cable plug and the optical fiber interface is evenly stressed and the connection is reliable, a plurality of first rotating members may be disposed to be clamped to the optical fiber patch cable plug, and a plurality of second rotating members further need to be disposed correspondingly. A specific manner of arrangement may be that the plurality of first rotating members are disposed abreast, and the plurality of second rotating members are disposed abreast.

The clamping component may be a structure as a whole, and may move in the radial direction of the plug-in port. A side that is of the clamping component and that faces the plug-in port is provided with a second limiting portion for preventing the optical fiber patch cable plug from being pulled out, and a second tripping protrusion for unlocking the second limiting portion and the optical fiber patch cable plug.

In a ninth possible implementation of the first aspect, the clamping component is a movable member that can move in the radial direction of the plug-in port. In addition to rotating with the main body, the clamping component may further move, for example, slide, in the radial direction of the plug-in port.

In a tenth possible implementation of the first aspect, the second limiting portion and the second tripping protrusion are disposed on the side that is of the clamping component and that faces the plug-in port. The second limiting portion is configured to prevent the optical fiber patch cable plug from being pulled out. The second tripping protrusion abuts against an unlocking pull strap of the optical fiber patch cable plug. In this way, when the unlocking pull strap of the optical fiber patch cable plug is pulled, the second tripping protrusion cooperates with the unlocking pull strap of the optical fiber patch cable plug, so that the clamping component moves towards a side away from the plug-in port, to disengage the second limiting portion from the optical fiber patch cable plug.

In an eleventh possible implementation of the first aspect, the second limiting portion is formed by the clamping component protruding towards the plug-in port. In the insertion direction of the optical fiber patch cable plug, a surface of a side that is of the second limiting portion and that faces the optical fiber patch cable plug is a smooth curved surface. The side that is of the second limiting portion and that is away from the optical fiber patch cable plug has a stop surface. The stop surface is perpendicular to the insertion direction of the optical fiber patch cable plug. The stop surface is configured to cooperate with a corresponding structure of the optical fiber patch cable plug, to prevent the optical fiber patch cable plug from being pulled out.

To facilitate insertion of the optical fiber patch cable plug, in the insertion direction of the optical fiber patch cable plug, the surface of the side that is of the second limiting portion and that faces the optical fiber patch cable plug is a smooth curved surface. To easily implement the function of the second limiting portion for preventing the optical fiber patch cable plug from being pulled out, in the insertion direction of the optical fiber patch cable plug, the side that is of the second limiting portion and that is away from the optical fiber patch cable plug has a stop surface, and the stop surface is perpendicular to the insertion direction of the optical fiber patch cable plug. In this way, the stop surface may cooperate with the corresponding structure of the optical fiber patch cable plug, to prevent the optical fiber patch cable plug from being pulled out.

In a twelfth possible implementation of the first aspect, the second tripping protrusion is also formed by the clamping component protruding towards the plug-in port. A surface that is of the second tripping protrusion and that faces the plug-in port is a smooth curved surface. The function of preventing the optical fiber patch cable plug from being pulled out does not need to be considered for the second tripping protrusion, as long as it is convenient for insertion and removal of the optical fiber patch cable plug, and convenient for cooperation between the second tripping protrusion and the unlocking pull strap of the optical fiber patch cable plug. In this way, when the unlocking pull strap of the optical fiber patch cable plug is pulled out, the second tripping protrusion can be easily lifted, so that the entire clamping component is lifted, and the clamping component (namely, the second limiting portion) and the optical fiber patch cable plug are unlocked.

In a thirteenth possible implementation of the first aspect, the elastic component includes a first spring piece and a second spring piece. Head ends and tail ends of the first spring piece and the second spring piece are all fixedly connected. A middle portion of the first spring piece and a middle portion of the second spring piece are disposed at an interval. The middle portion of the first spring piece abuts against the side that is of the clamping component and that is away from the plug-in port, and the middle portion of the second spring piece is fixed to the main body. The foregoing implementation is a specific implementation of the elastic component. The elastic component is formed by two spring pieces, so that strength of the elastic component can be enhanced, and a service life can be prolonged. That the middle portion of the first spring piece and the middle portion of the second spring piece are disposed at an interval means that there is a gap between the middle portion of the first spring piece and the middle portion of the second spring piece. The middle portions of the two spring pieces are disposed away from each other, to form deformation space and obtain better elastic deformation force.

In a fourteenth possible implementation of the first aspect, a plurality of limiting rods are disposed on the clamping component. The plurality of limiting rods are disposed corresponding to the head ends or the tail ends of the first spring piece and the second spring piece, and are configured to limit a position of the elastic component. To facilitate cooperation between the clamping component and the elastic component, the plurality of limiting rods are disposed on the clamping component. Some of the limiting rods are used to limit a head end of the elastic component, and some of the limiting rods are used to limit a tail end of the elastic component. The plurality of limiting rods are disposed, so that the head end or the tail end of the elastic component is limited, by the limiting rods, to a corresponding position of the clamping component, to prevent the elastic component from being misplaced in a deformation process.

In a fifteenth possible implementation of the first aspect, the elastic component is a spring, a torsion spring, or a plate spring. The elastic component may be customized based on specific needs, or may be conventional elastic parts, convenient to purchase and implement. For example, the elastic component may be a spring, a torsion spring, or a plate spring.

In a sixteenth possible implementation of the first aspect, a second bearing frame corresponding to the clamping component is disposed in the main body. A guide groove provided in the radial direction of the plug-in port is provided on the second bearing frame. The clamping component is disposed in the guide groove. The clamping component moves in the radial direction of the plug-in port, and correspondingly, the main body also needs to be disposed to cooperate with the movement of the clamping component in the radial direction of the plug-in port. For example, the second bearing frame is disposed, the guide groove is provided on the bearing frame, and the clamping component may move in the radial direction of the plug-in port in the guide groove.

In a seventeenth possible implementation of the first aspect, a third bearing groove and a fourth bearing groove are provided on the second bearing frame. Two opposite edges of the clamping component respectively extend into the third bearing groove and the fourth bearing groove. To enable the second bearing frame to bear the clamping component, the third bearing groove and the fourth bearing groove are further provided on the second bearing frame, so that the two opposite edges of the clamping component respectively extend into the third bearing groove and the fourth bearing groove.

In an eighteenth possible implementation of the first aspect, the cover plate is a sheet metal part. The elastic component is a bent elastic piece on the cover plate. The bent elastic piece is bent towards the plug-in port and abuts against the clamping component. The elastic component may be disposed between the cover plate and the clamping component, and may be a spring, a torsion spring, a plate spring, or the like. In this way, the elastic component is a bent elastic piece formed by bending on cover plate. The bent elastic piece is bent towards the plug-in port and can abut against the clamping component, to apply retention force towards the plug-in port to the clamping component.

In a nineteenth possible implementation of the first aspect, an elastic piece limiting groove is provided on a side that is of the clamping component and that faces the bent elastic piece. An end portion of the bent elastic piece extends into the elastic piece limiting groove. To limit a position of the bent elastic piece on the clamping component and prevent the bent elastic piece from being misplaced with the clamping component in a bending elastic deformation process, the elastic piece limiting groove is provided on the side that is of the clamping component and that faces the bent elastic piece. In this way, the position of the bent elastic piece on the clamping component can be limited through extending of the end portion of the bent elastic piece into the elastic piece limiting groove.

According to a second aspect, an embodiment of this application provides an optical module, including an optoelectronic device, a functional circuit, and the optical fiber interface according to the first aspect. The optical fiber interface is configured to connect to an optical fiber patch cable plug.

According to the optical module provided in this embodiment of this application, the optical fiber interface according to the first aspect is disposed, and the optical fiber interface is configured to connect to the optical fiber patch cable plug. Therefore, problems of inconvenient manufacture and inconvenient assembly can be resolved.

According to a third aspect, an embodiment of this application provides a communication device provided with the optical module according to the second aspect.

The communication device provided in this embodiment of this application is provided with the optical module according to the second aspect. The optical fiber interface according to the first aspect is provided in the optical module. The optical fiber interface is configured to connect to the optical fiber patch cable plug. Therefore, problems of inconvenient manufacture and inconvenient assembly can be resolved.

### BRIEF DESCRIPTION OF DRAWINGS

FIG. 1 is a three-dimensional diagram of a structure of a conventional optical fiber patch cable plug;
FIG. 2 is a schematic exploded view of a conventional optical fiber patch cable plug;
FIG. 3 is a schematic diagram of a structure of an optical fiber interface of a conventional optical module;
FIG. 4 is a schematic diagram of a structure of a hook structure in an optical fiber interface of a conventional optical module;
FIG. 5 is a schematic diagram of a structure of cooperative connection between a conventional optical fiber patch cable plug and an optical fiber interface of an optical module;
FIG. 6 is a first schematic exploded view of a structure of an optical fiber interface in Embodiment 1 according to an embodiment of this application;
FIG. 7 is a second schematic exploded view of a structure of an optical fiber interface in Embodiment 1 according to an embodiment of this application;
FIG. 8 is a first schematic diagram of a structure of cooperation between a first rotating member and a second rotating member of an optical fiber interface in Embodiment 1 according to an embodiment of this application;
FIG. 9 is a second schematic diagram of a structure of cooperation between a first rotating member and a second rotating member of an optical fiber interface in Embodiment 1 according to an embodiment of this application;
FIG. 10 is a schematic cross-sectional view of a structure of insertion of a clamping component of an optical fiber interface in Embodiment 1 into an optical fiber patch cable plug according to an embodiment of this application;
FIG. 11 is a schematic cross-sectional view of a structure of unlocking of a clamping component of an optical fiber interface in Embodiment 1 from an optical fiber patch cable plug according to an embodiment of this application;
FIG. 12 is a schematic diagram of a structure of a first bearing frame of an optical fiber interface in Embodiment 1 according to an embodiment of this application;
FIG. 13 is a schematic diagram of a structure of a cover plate of an optical fiber interface in Embodiment 1 according to an embodiment of this application;
FIG. 14 is a first schematic diagram of a structure of a clamping component of an optical fiber interface in Embodiment 2 according to an embodiment of this application;
FIG. 15 is a second schematic diagram of a structure of a clamping component of an optical fiber interface in Embodiment 2 according to an embodiment of this application;
FIG. 16 is a first schematic three-dimensional view of a structure of cooperation between an elastic component of an optical fiber interface in Embodiment 2 and an optical fiber patch cable plug according to an embodiment of this application;
FIG. 17 is a second schematic three-dimensional view of a structure of cooperation between an elastic component of an optical fiber interface in Embodiment 2 and an optical fiber patch cable plug according to an embodiment of this application;
FIG. 18 is a third schematic diagram of a structure of a clamping component of an optical fiber interface in Embodiment 2 according to an embodiment of this application;
FIG. 19 is a fourth schematic diagram of a structure of a clamping component of an optical fiber interface in Embodiment 2 according to an embodiment of this application;
FIG. 20 is a first schematic diagram of a structure of an elastic component of an optical fiber interface in Embodiment 2 according to an embodiment of this application;
FIG. 21 is a schematic diagram of a structure after assembly of a clamping component and an elastic component of an optical fiber interface in Embodiment 2 according to an embodiment of this application;
FIG. 22 is a first schematic diagram of a structure of a cover plate of an optical fiber interface in Embodiment 2 according to an embodiment of this application;
FIG. 23 is a schematic diagram of a structure after assembly of a clamping component, an elastic component, and a cover plate of an optical fiber interface in Embodiment 2 according to an embodiment of this application;
FIG. 24 is a second schematic diagram of a structure of an elastic component of an optical fiber interface in Embodiment 2 according to an embodiment of this application;
FIG. 25 is a second schematic diagram of a structure after assembly of a clamping component and an elastic component of an optical fiber interface in Embodiment 2 according to an embodiment of this application;
FIG. 26 is a second schematic diagram of a structure of a cover plate of an optical fiber interface in Embodiment 2 according to an embodiment of this application;
FIG. 27 is a schematic diagram of a structure in which an elastic component of an optical fiber interface in Embodiment 2 is a torsion spring according to an embodiment of this application;
FIG. 28 is a schematic three-dimensional view of a structure in which an elastic component is integrated on a cover plate of an optical fiber interface in Embodiment 2 according to an embodiment of this application;
FIG. 29 is a schematic top view of a structure in which an elastic component is integrated on a cover plate of an optical fiber interface in Embodiment 2 according to an embodiment of this application;
FIG. 30 is a schematic exploded view of a structure of assembling a cover plate and a main body of an optical fiber interface in Embodiment 2 according to an embodiment of this application;
FIG. 31 is a schematic diagram of a structure of assembly of a cover plate and a main body of an optical fiber interface in Embodiment 2 according to an embodiment of this application;
FIG. 32 is a schematic top view of a structure of a second bearing frame of an optical fiber interface in Embodiment 2 according to an embodiment of this application;
FIG. 33 is a schematic top view of a structure after assembly of a second bearing frame and a clamping component of an optical fiber interface in Embodiment 2 according to an embodiment of this application; and
FIG. 34 is a schematic top view of a structure after assembly of a second bearing frame, a clamping component, and an elastic component of an optical fiber interface in Embodiment 2 according to an embodiment of this application.

### Reference numerals:

1-optical fiber patch cable plug; 11-clamping groove; 12-plug body; 13-unlocking pull strap; 131-bearing groove; 132-protrusion portion; 2-optical fiber interface; 21-hook structure; 211-hook portion; 212-unlocking portion; 3-avoidance space; 100-main body; 101-plug-in port; 102-first bearing frame; 1021-hollow portion; 1022-first bearing groove; 1023-second bearing groove; 103-cover plate; 1031-clamping hole; 1032-positioning hole; 104-second bearing frame; 1041-guide groove; 1042-third bearing groove; 1043-fourth bearing groove; 105-clamping protrusion; 200-clamping unlocking mechanism; 201-clamping component; 2011-first rotating member; 20111-first limiting portion; 20112-first bearing protrusion; 2012-second rotating member; 20121-first tripping protrusion; 20122-second bearing protrusion; 2013-limiting rod; 202-elastic component; 2021-bent elastic piece; 2022-first spring piece; 2023-second spring piece; 203-second limiting portion; 2031-stop surface; 204-second tripping protrusion; and 205-elastic piece limiting groove.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments of this application, unless otherwise specified, "a plurality of" means two or more than two.

In addition, in this application, the terms of direction such as "upper", "lower", "left", and "right" are defined relative to an illustrated placement position of a component in an accompanying drawing. It should be understood that the terms of direction are relative concepts and are used to describe and clarify relativity, and may be changed accordingly as a placement position of the component in the accompanying drawing changes.

In this application, unless otherwise specified and limited, the term "connection" should be understood in a broad sense. For example, the "connection" may be a fixed connection, a detachable connection, an integration, a direct connection, or an indirect connection through an intermediate medium.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a relative concept in a specific manner.

Optical module: An optical module is an optoelectronic device for photoelectric and electro-optical conversion, and includes an optoelectronic device, a functional circuit, an optical interface, and the like. The optoelectronic device includes two parts of transmitting and receiving. A transmit end of the optical module converts an electrical signal into an optical signal and a receive end converts an optical signal into an electrical signal. A function of the optical module is to convert electrical signals into optical signals at the transmit end. After the optical signals are transmitted through optical fibers, the receive end converts the optical signals into electrical signals.

In the transmitting part, input electrical signals of a specific bit rate are processed by an internal drive chip to drive a semiconductor laser (LD) or a light emitting diode (LED) to emit modulated optical signals of a corresponding rate. The transmitting part has an automatic optical power control circuit, to stabilize power of the output optical signals. In the receiving part, after optical signals of a specific bit rate are input to the module, an optical detection diode converts the optical signals into electrical signals. After the electrical signals pass through a preamplifier, electrical signals of a corresponding bit rate are output.

Optical fiber patch cable ( Patch Cable): Connector plugs are installed at both ends of an optical cable to implement active connection of an optical path. The optical fiber patch cable is used as a patch cable from a device to an optical fiber cabling link. The optical fiber patch cable has a thick protective layer, is generally used for connection between an optical transceiver and a terminal box, and is used in some fields such as an optical fiber communication system, an optical fiber access network, optical fiber data transmission, and a local area network.

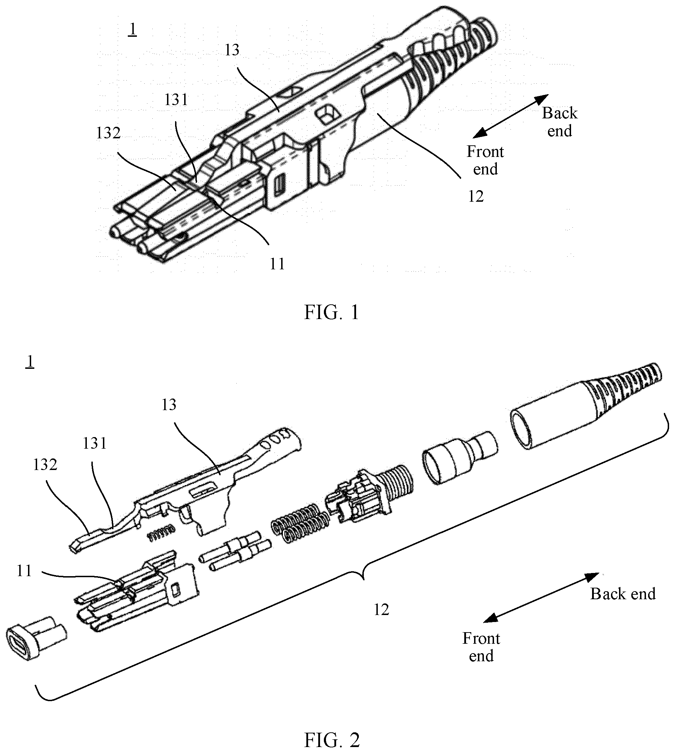

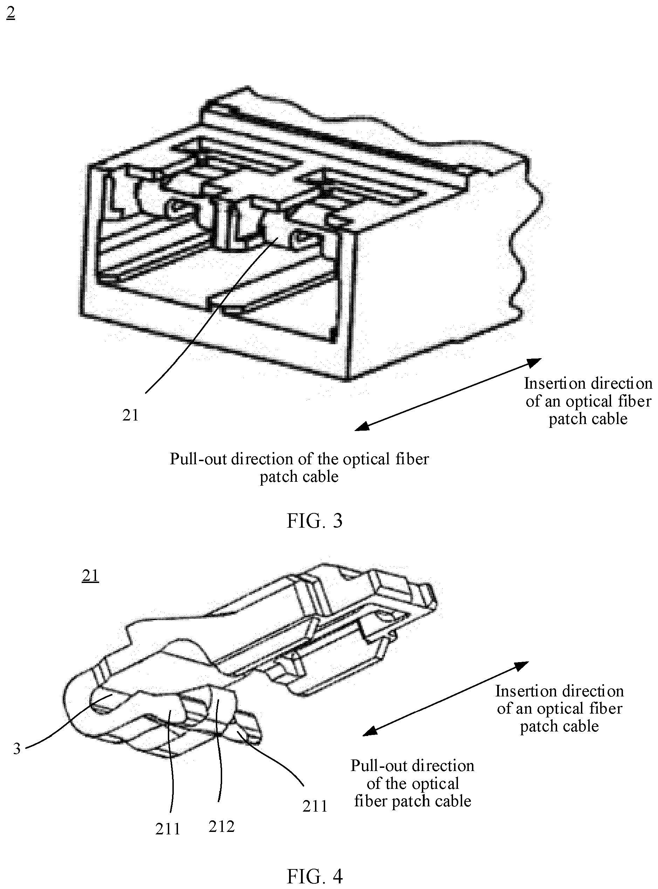

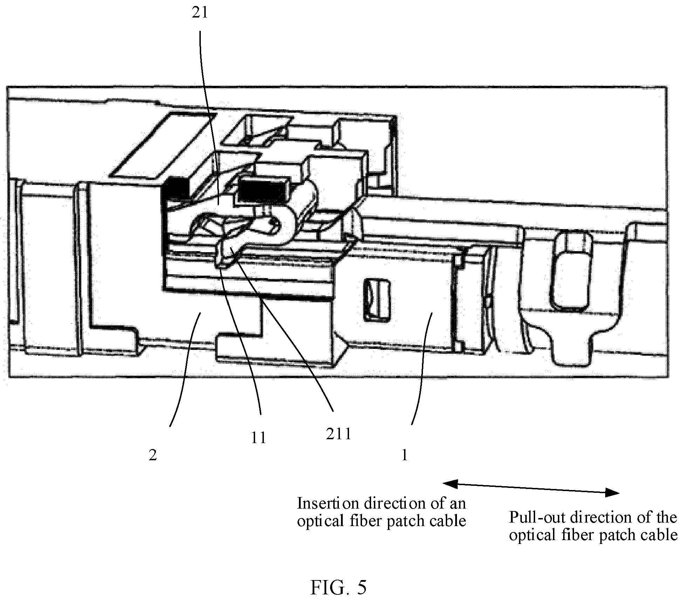

For cooperation between an optical fiber patch cable plug and an optical fiber interface of the optical module, an adaptation structure is required to implement self-locking and unlocking of the optical fiber patch cable plug and the optical fiber interface, to further implement insertion and removal of the optical fiber patch cable plug. For example, FIG. 1 is a three-dimensional diagram of a structure of a conventional optical fiber patch cable plug 1. FIG. 2 is a schematic exploded view of the conventional optical fiber patch cable plug 1. FIG. 3 is a schematic diagram of a structure of an optical fiber interface 2 of a conventional optical module. FIG. 4 is a schematic diagram of a structure of a hook structure 21 in the optical fiber interface 2 of the conventional optical module. When the optical fiber patch cable plug 1 is connected to the optical module, the optical fiber patch cable plug 1 is inserted into the optical fiber interface 2 of the optical module. The hook structure 21 in the optical fiber interface 2 cooperates with a corresponding structure on the optical fiber patch cable plug 1 to implement connection and fixation. Specifically, FIG. 5 is a schematic diagram of a structure of cooperative connection between the optical fiber patch cable plug 1 and the optical fiber interface 2 of the optical module. A clamping groove 11 corresponding to the hook structure 21 of the optical fiber interface 2 of the optical module is provided on the optical fiber patch cable plug 1. The hook portion 211 of the hook structure 21 cooperates with the clamping groove 11, so that the optical fiber patch cable plug 1 and the optical fiber interface 2 of the optical module can be connected and fixed.

To facilitate unlocking of the connection between the optical fiber patch cable plug 1 and the optical fiber interface 2 and to facilitate the insertion and removal, the structures of the optical fiber patch cable plug 1 and the optical fiber interface 2 are both provided with an unlocking mechanism. Specifically, refer to FIG. 1 and FIG. 2. The optical fiber patch cable plug 1 includes a plug body 12 and an unlocking pull strap 13 that can move in an axial direction of the optical fiber patch cable plug 1. The clamping groove 11 corresponding to the hook portion 211 of the hook structure 21 in FIG. 4 is provided on the plug body 12. The unlocking pull strap 13 is a part of the unlocking mechanism, and a bearing groove 131 and a protrusion portion 132 that is continuous with the bearing groove 131 are disposed on the unlocking pull strap 13 corresponding to the hook structure 21 in FIG. 4. Refer to FIG. 4. In addition to the hook portion 211, an unlocking portion 212 is further disposed on the hook structure 21 of the optical fiber interface 2.

Refer to FIG. 2, FIG. 4, and FIG. 5. The unlocking portion 212 abuts against and cooperates with the unlocking pull strap 13 of the optical fiber patch cable plug 1. When the plug of the optical fiber patch cable plug 1 extends into the optical fiber interface 2 of the optical module, the hook portion 211 of the hook structure 21 cooperates with the clamping groove 11, and the unlocking portion 212 of the hook structure 21 abuts against the bearing groove 131. In this case, the optical fiber patch cable plug 1 is connected and fixed to the optical fiber interface 2 of the optical module. When the optical fiber patch cable plug 1 needs to be pulled out, the unlocking pull strap 13 is pulled in the axial direction of the optical fiber patch cable plug 1, so that the unlocking portion 212 of the hook structure 21 gradually slides from abutting against the bearing groove 131 to abutting against the protrusion portion 132. In this case, the protrusion portion 132 lifts the entire hook structure 21, so that the hook portion 211 of the hook structure 21 is unlocked from the clamping groove 11, and then the optical fiber patch cable plug 1 can be pulled out. In this way, it is convenient for unlocking of the connection between the optical fiber patch cable plug 1 and the optical fiber interface 2, and convenient for insertion and removal.

In the foregoing connection structure of the conventional optical fiber interface 2, refer to FIG. 4. Both the hook portion 211 and the unlocking portion 212 are disposed on the hook structure 21. In addition, clamping between the hook portion 211 and the clamping groove 11 needs to ensure avoidance space 3 above the hook portion 211, so that the hook portion 211 can deform in the avoidance space 3 when being clamped. In other words, the hook structure 21 is an integral part made of an elastic material. The hook portion 211 and the unlocking portion 212 need to be disposed on the integral part, and the avoidance space 3 needs to be reserved. Therefore, the hook structure 21 has a complex structure, is difficult to mold, has high molding costs, and is inconvenient to manufacture, process, and assemble.

An embodiment of this application provides a communication device. The communication device has an optical module. An optical fiber interface is disposed in the optical module. The optical fiber interface has a new structure design, to resolve problems of inconvenient manufacture and inconvenient assembly.

An embodiment of this application further provides an optical module. The optical module includes an optoelectronic device, a functional circuit, and an optical fiber interface. The optical fiber interface has a new structure design, to resolve problems of inconvenient manufacture and inconvenient assembly.

An embodiment of this application provides an optical fiber interface. The optical fiber interface may be disposed on any communication device, and is configured to connect to the optical fiber patch cable plug 1.

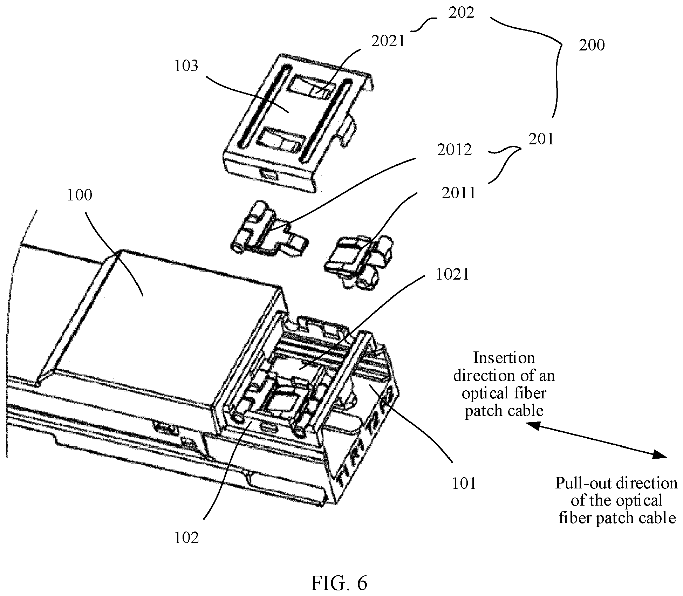

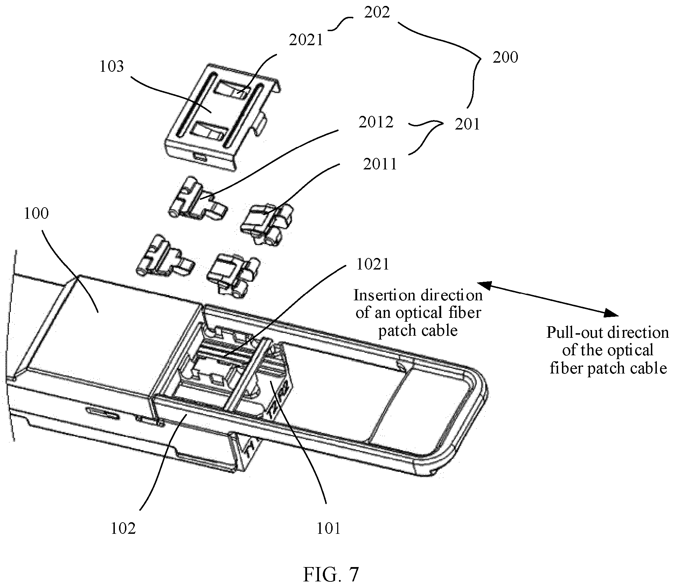

Specifically, refer to FIG. 6 and FIG. 7. An optical fiber interface according to an embodiment of this application is configured to connect to the optical fiber patch cable plug 1, and includes a main body 100, a cover plate 103, and a clamping unlocking mechanism 200. A plug-in port 101 for insertion of the optical fiber patch cable plug 1 is disposed on the main body 100. The cover plate 103 is disposed on the main body 100 and is fixed to the main body 100. The clamping unlocking mechanism 200 is disposed between the plug-in port 101 and the cover plate 103. The clamping unlocking mechanism 200 includes a clamping component 201 and an elastic component 202. The clamping component 201 is disposed in a radial direction of the plug-in port 101. When the optical fiber patch cable plug 1 is inserted into the plug-in port 101, the clamping component 201 is clamped to the optical fiber patch cable plug 1 to prevent the optical fiber patch cable plug 1 from being pulled out. The elastic component 202 is configured to apply elastic force towards the optical fiber patch cable plug 1 to the clamping component 201, and the elastic force can prevent unlocking of clamping between the clamping component 201 and the optical fiber patch cable plug 1.

According to the optical fiber interface provided in this embodiment of this application, when the optical fiber patch cable plug 1 is inserted into or pulled out from the plug-in port 101, the elastic component 202 deforms, to facilitate clamping or unlocking of the clamping component 201 and the optical fiber patch cable plug 1. Because the clamping component 201 and the elastic component 202 are two relatively independent parts, the clamping component 201 does not need to deform, and is manufactured and installed separately from the deformed elastic component 202, to simplify a structure of a single part, and facilitate molding, manufacturing, and assembly.

For ease of understanding, the clamping component 201 and the elastic component 202 combined can implement clamping and unlocking of the optical fiber patch cable plug 1 and the optical interface. Therefore, the clamping component 201 and the elastic component 202 may be collectively referred to as the clamping unlocking mechanism 200.

The elastic component 202 may be disposed based on an actual situation, as long as retention force towards the optical fiber patch cable plug 1 can be applied to the clamping component 201. The retention force needs to ensure that the clamping component 201 is subject to force towards the optical fiber patch cable plug 1. According to a displacement form of the clamping component 201, the elastic component 202 may be disposed on a side that is of the clamping component 201 and that is away from the plug-in port 101, to apply the retention force towards the optical fiber patch cable plug 1 to the clamping component 201. Certainly, if the clamping component 201 may move in a special form, for example, a rotation form, the elastic component 202 may be disposed on a rotating shaft. Specifically, refer to FIG. 6 and FIG. 7. The elastic component 202 is disposed on the side that is of the clamping component 201 and that is away from the plug-in port 101. When the clamping component 201 is clamped to the optical fiber patch cable plug 1, the elastic component 202 is in a compressed state.

The clamping component 201 may move (for example, slide) in the radial direction of the plug-in port 101, or may be rotatably connected to the main body 100.

### Embodiment 1

Refer to FIG. 6, FIG. 7, FIG. 8, and FIG. 9. The clamping component 201 in this embodiment is rotatably connected to the main body 100. When the optical fiber patch cable plug 1 is inserted into the plug-in port 101, the clamping component 201 may rotate in a direction away from the plug-in port 101.

The clamping component 201 is rotatably connected to the main body 100. A rotating member may be disposed separately, or a clamping part and an unlocking part may be disposed separately. The clamping part and the unlocking part being disposed separately are used as an example. Refer to FIG. 6, FIG 7, FIG 8 and FIG 9. A rotation axis of the first rotating member 2011 and a rotation axis of the second rotating member 2012 are parallel. The first rotating member 2011 and the second rotating member 2012 each are rotatably connected to the main body 100 through an end portion. Another end of the first rotating member 2011 and another end of the second rotating member 2012 are both free ends. The free end of the first rotating member 2011 overlaps a side that is of the free end of the second rotating member 2012 and that is away from the plug-in port 101.

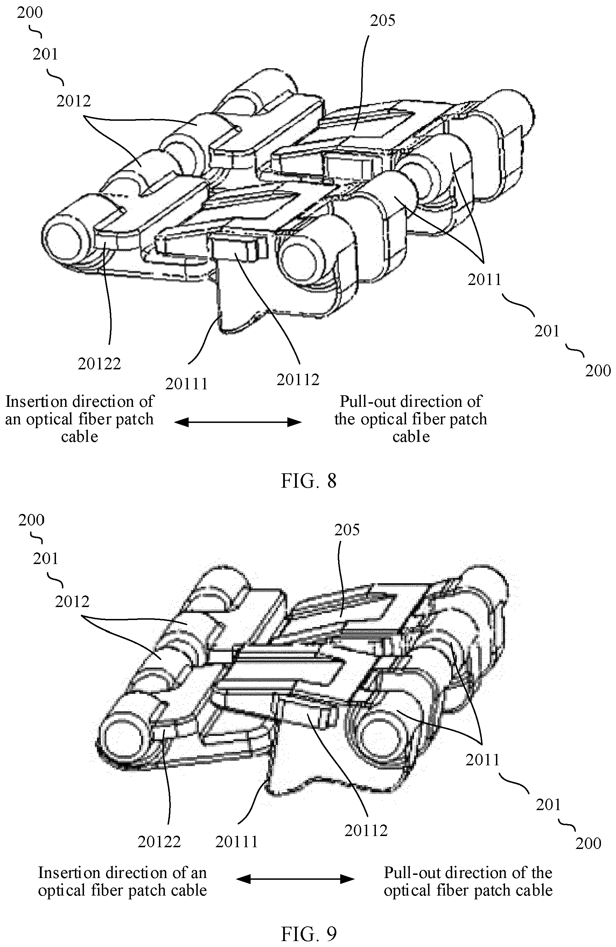

Refer to FIG. 8 and FIG. 9. The clamping component 201 includes a first rotating member 2011 and a second rotating member 2012 that are rotatably connected to the main body 100. The first rotating member 2011 overlaps the side that is of the second rotating member 2012 and that is away from the plug-in port 101. The first rotating member 2011 includes a first limiting portion 20111, and the first limiting portion 20111 is configured to prevent the optical fiber patch cable plug 1 from being pulled out. The second rotating member 2012 is provided with a first tripping protrusion 20121, and the first tripping protrusion 20121 overlaps the unlocking pull strap 13 of the optical fiber patch cable plug 1.

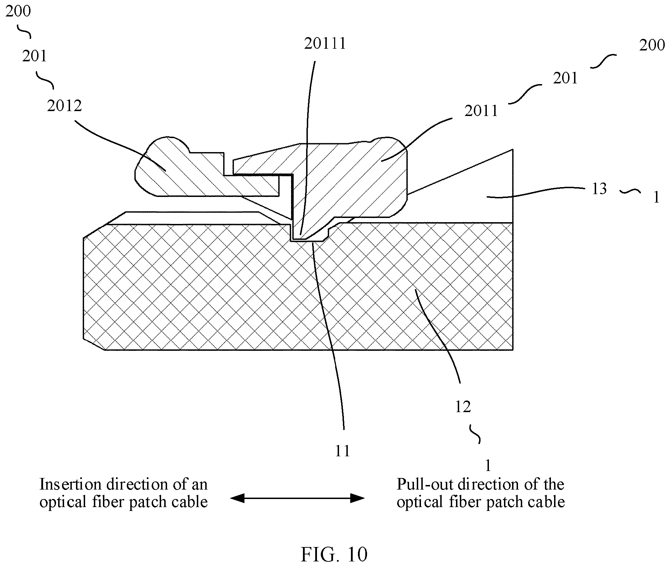

Specifically, refer to FIG. 10. The first limiting portion 20111 of the first rotating member 2011 is cooperatively clamped in the clamping groove 11 of the optical fiber patch cable plug 1. This can prevent the optical fiber patch cable plug 1 from being pulled out, and implement insertion of the optical fiber patch cable plug 1 into the optical fiber interface.

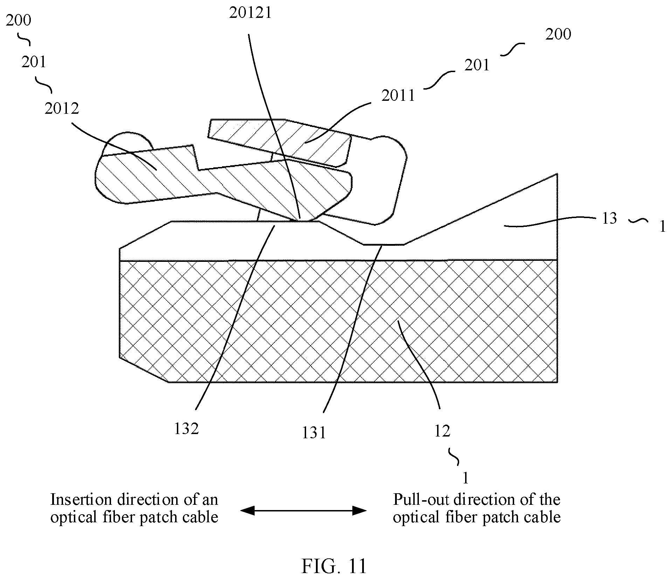

Refer to FIG. 11. When the optical fiber patch cable plug 1 needs to be pulled out from the optical fiber interface, the unlocking pull strap 13 of the optical fiber patch cable plug 1 is pulled. The first tripping protrusion 20121 of the second rotating member 2012 cooperates with the unlocking pull strap 13 of the optical fiber patch cable plug 1, so that the second rotating member 2012 rotates towards the side away from the plug-in port 101. In this case, the second rotating member 2012 pushes the first rotating member 2011 to the side away from the plug-in port 101, so that the first limiting portion 20111 is disengaged from the optical fiber patch cable plug 1. In this way, the optical fiber patch cable plug 1 is pulled out from the optical fiber interface.

Refer to FIG. 6, FIG. 7 and FIG. 12. The clamping unlocking mechanism 200 includes a first bearing frame 102 disposed in the radial direction of the plug-in port 101. The first rotating member 2011 and the second rotating member 2012 are mounted on the first bearing frame 102. The first bearing frame 102 includes a hollow portion 1021. The first limiting portion 20111 of the first rotating member 2011 and the first tripping protrusion 20121 of the second rotating member 2012 are disposed in the hollow portion 1021. The first rotating member 2011 and the second rotating member 2012 cooperate with the main body 100 through the first bearing frame 102. The first rotating member 2011 and the second rotating member 2012 are rotatably connected to the first bearing frame 102, and the respective functional portions (namely, the first limiting portion 20111 of the first rotating member 2011 and the first tripping protrusion 20121 of the second rotating member 2012) are disposed in the hollow portion 1021, to ensure cooperation with the optical fiber patch cable plug 1.

Because the first rotating member 2011 and the second rotating member 2012 are both rotatably connected to the first bearing frame 102, and the first bearing frame 102 is provided with the hollow portion 1021, the free end of the first rotating member 2011 and the free end of the second rotating member 2012 may both completely rotate to the hollow portion 1021. This may cause a stuck situation.

Therefore, to prevent the free end of the first rotating member 2011 and the free end of the second rotating member 2012 from completely rotating to the hollow portion 1021 of the first bearing frame 102, a first bearing groove 1022 and a second bearing groove 1023 are provided on the first bearing frame 102. Refer to FIG. 6, FIG. 7, and FIG. 12. A side wall of the first rotating member 2011 includes a first bearing protrusion 20112. A side wall of the second rotating member 2012 includes a second bearing protrusion 20122. The first bearing protrusion 20112 correspondingly extends into the first bearing groove 1022, to limit movement of the first rotating member 2011 towards the plug-in port 101. The second bearing protrusion 20122 correspondingly extends into the second bearing groove 1023, to limit movement of the second rotating member 2012 towards the plug-in port 101.

Further, the movement of the first rotating member 2011 is limited through cooperation between the first bearing protrusion 20112 and the first bearing groove 1022, and the movement of the second rotating member 2012 is limited through cooperation between the second bearing protrusion 20122 and the second bearing groove 1023.

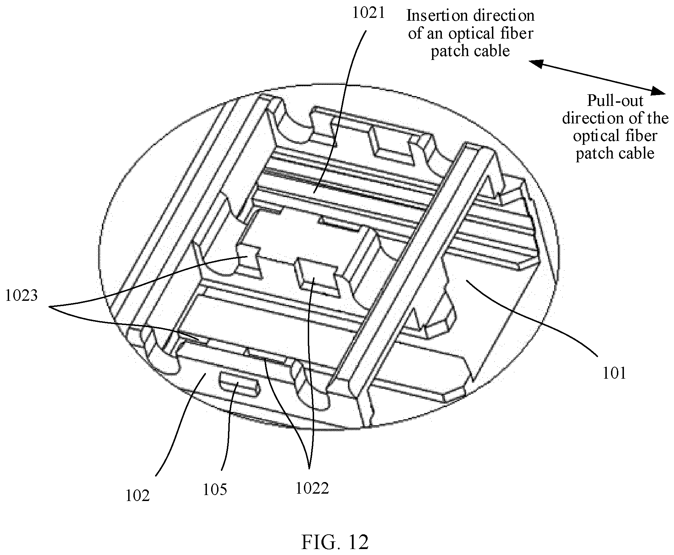

Refer to FIG. 6 and FIG. 12. Because the free end of the first rotating member 2011 overlaps the side that is of the free end of the second rotating member 2012 and that is away from the plug-in port 101, the second rotating member 2012 bears the first rotating member 2011. Therefore, as long as the free end of the second rotating member 2012 is limited, it can be ensured that the free end of the first rotating member 2011 does not rotate to the hollow portion 1021 of the first bearing frame 102. In other words, the second bearing groove 1023 may be disposed on the first bearing frame 102, the side wall of the second rotating member 2012 includes the second bearing protrusion 20122, and the second bearing protrusion 20122 correspondingly extends into the second bearing groove 1023, to limit movement of the second rotating member 2012 towards the plug-in port 101.

An elastic component 202 is further disposed on the first bearing frame 102. In addition, to protect the first rotating member 2011 and the second rotating member 2012 and to facilitate disassembly, a cover plate 103 is further disposed on the first bearing frame 102. Refer to FIG. 6 and FIG. 7. The cover plate 103 can be clamped and fastened to the first bearing frame 102.

The elastic component 202 may be disposed between the cover plate 103 and the first rotating member 2011, and may be a spring, a torsion spring, a plate spring, or the like. For ease of implementation and manufacturing, the elastic component 202 may be integrated onto the cover plate 103. For example, refer to FIG. 6, FIG. 7, and FIG. 13. The cover plate 103 is a sheet metal part. The elastic component 202 is a bent elastic piece 2021 formed by bending on the cover plate 103. The bent elastic piece 2021 is bent towards the plug-in port 101 and can abut against the clamping component 201, to apply retention force towards the plug-in port 101 to the clamping component 201.

In Embodiment 1, when the clamping component 201 includes the first rotating member 2011 and the second rotating member 2012, the bent elastic piece 2021 may abut against the first rotating member 2011, to apply the retention force for the first rotating member 2011 towards the plug-in port 101.

To limit a position of the bent elastic piece 2021 on the first rotating member 2011 and prevent the bent elastic piece 2021 from being misplaced with the first rotating member 2011 in a bending elastic deformation process, refer to FIG. 8 and FIG. 9. An elastic piece limiting groove 205 is provided on the side that is of the first rotating member 2011 and that faces the bent elastic piece 2021. With reference to FIG. 6, FIG. 7, and FIG. 13, an end portion of the bent elastic piece 2021 extends into the elastic piece limiting groove 205. The elastic piece limiting groove 205 is provided on the side that is of the first rotating member 2011 and that faces the bent elastic piece 2021. In this way, the end portion of the bent elastic piece 2021 extends into the elastic piece limiting groove 205, so that the position of the bent elastic piece 2021 on the first rotating member 2011 can be limited.

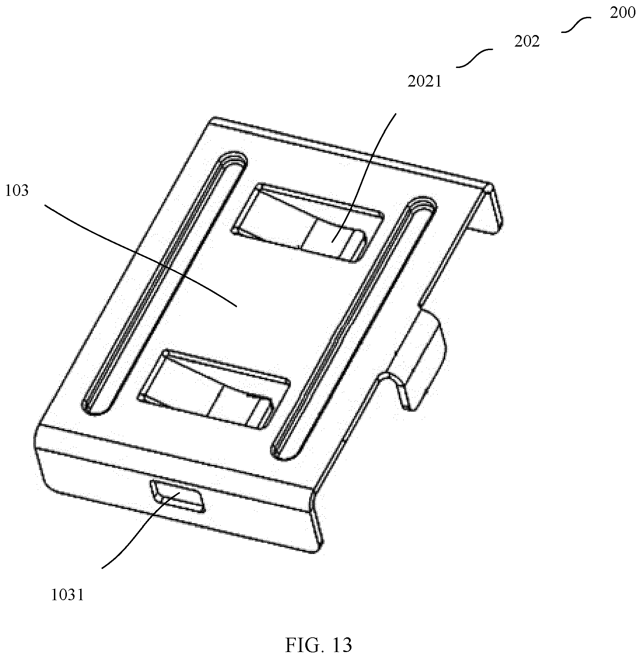

The cover plate 103 and the main body 100 may be fastened together, and this can be implemented through a clamping structure. For example, refer to FIG. 12 and FIG. 13. A clamping hole 1031 is provided on the cover plate 103, and a clamping protrusion 105 is disposed on the main body 100. The cover plate 103 and the main body 100 can be fastened by clamping the clamping protrusion 105 into the clamping hole 1031.

To ensure that the connection locking between the optical fiber patch cable plug 1 and the optical fiber interface is evenly stressed and the connection is reliable, a plurality of first rotating members 2011 may be disposed to be clamped to the optical fiber patch cable plug 1, and a plurality of second rotating members 2012 further need to be disposed correspondingly. A specific manner of arrangement may be that the plurality of first rotating members 2011 are disposed abreast, and the plurality of second rotating members 2012 are disposed abreast. For example, refer to FIG. 6 and FIG. 7. There are two first rotating members 2011 and two second rotating members 2012. The two first rotating members 2011 are disposed abreast, and the two second rotating members 2012 are disposed abreast.

In addition to rotating with the main body 100, the clamping component 201 may further move, for example, slide, in the radial direction of the plug-in port 101.

### Embodiment 2

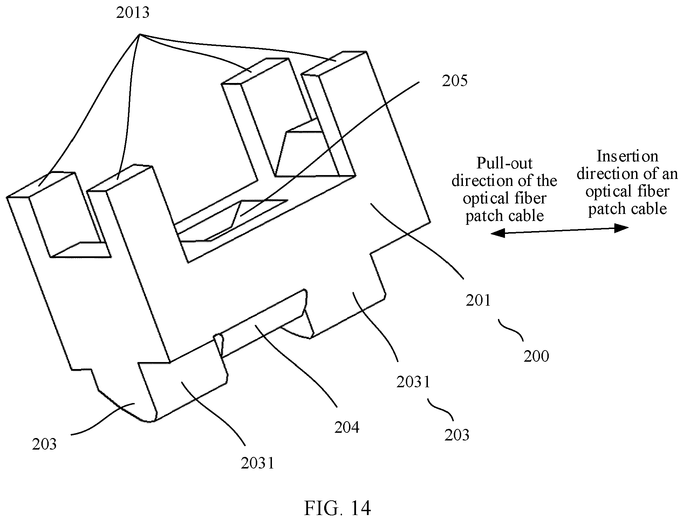

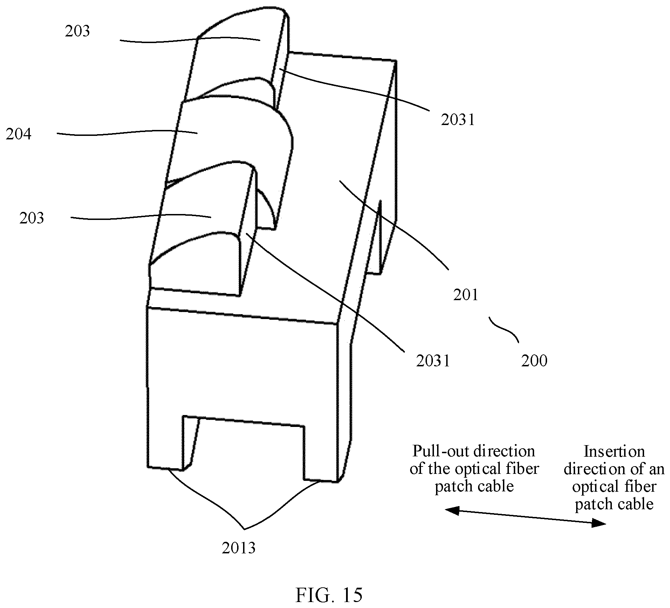

Refer to FIG. 14 and FIG. 15. The clamping component 201 according to this embodiment may be an integral movable member, and may move in the radial direction of the plug-in port 101. A side that is of the clamping component 201 and that faces the plug-in port 101 (not shown in the figure) is provided with a second limiting portion 203 for preventing the optical fiber patch cable plug 1 from being pulled out, and a second tripping protrusion 204 for unlocking a second limiting portion 203 and the optical fiber patch cable plug 1.

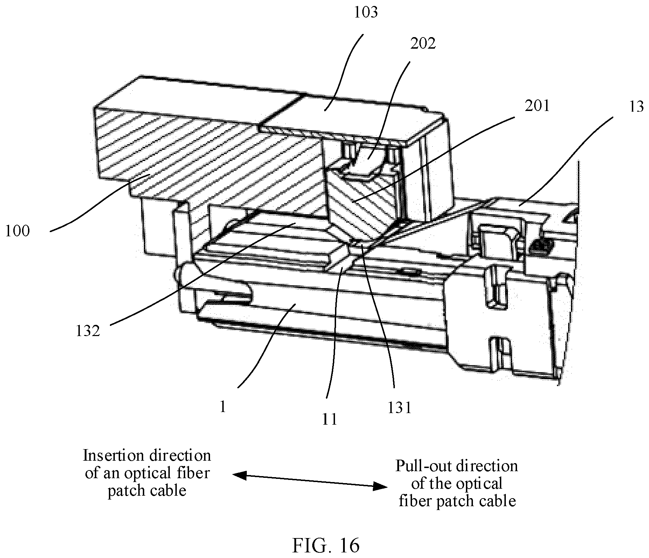

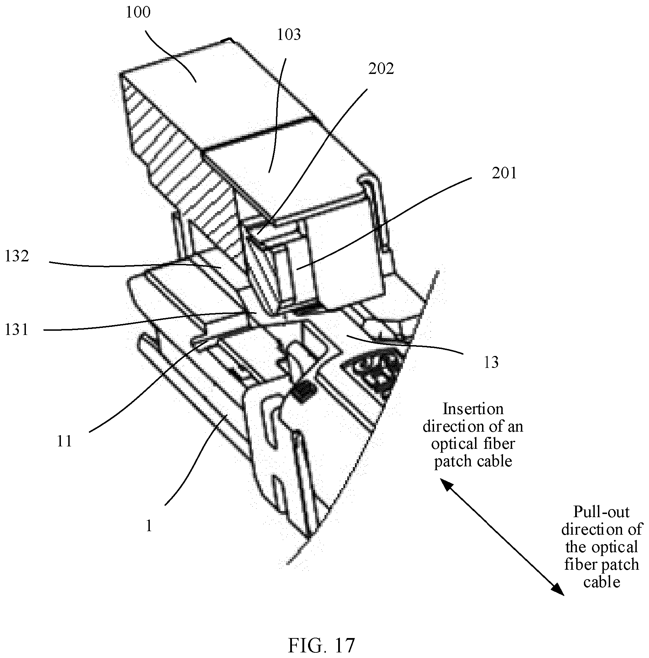

To implement cooperation between the clamping component 201 and the optical fiber patch cable plug 1, refer to FIG. 15, FIG. 16, and FIG. 17. The second limiting portion 203 and the second tripping protrusion 204 are disposed on the side that is of the clamping component 201 and that faces the plug-in port 101. The second limiting portion 203 is configured to cooperate with the clamping groove 11 of the optical fiber patch cable plug 1 to prevent the optical fiber patch cable plug 1 from being pulled out. The second tripping protrusion 204 is configured to cooperate with the bearing groove 131 or the protrusion portion 132 of the unlocking pull strap 13 of the optical fiber patch cable plug 1.

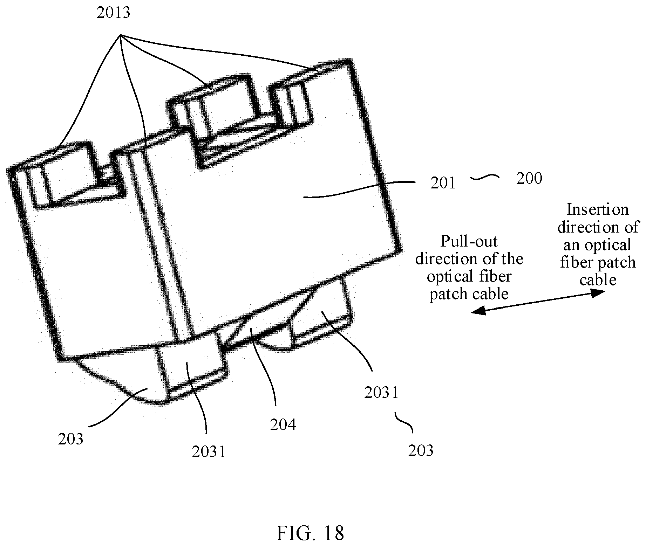

In some embodiments, refer to FIG. 14, FIG. 15, FIG. 18, and FIG. 19. The second limiting portion 203 is formed by the clamping component 201 protruding towards the plug-in port 101. To facilitate insertion of the optical fiber patch cable plug 1, in the insertion direction of the optical fiber patch cable plug 1, a surface of a side that is of the second limiting portion 203 and that faces the optical fiber patch cable plug 1 is a smooth curved surface.

To easily implement the function of the second limiting portion 203 for preventing the optical fiber patch cable plug 1 from being pulled out, refer to FIG. 14, FIG. 15, FIG. 18, and FIG. 19. In the insertion direction of the optical fiber patch cable plug 1, the side that is of the second limiting portion 203 and that is away from the optical fiber patch cable plug 1 has a stop surface 2031. The stop surface 2031 is perpendicular to the insertion direction of the optical fiber patch cable plug 1. In this way, the stop surface 2031 may cooperate with a corresponding structure of the optical fiber patch cable plug 1, to prevent the optical fiber patch cable plug 1 from being pulled out.

It should be noted that, that the stop surface 2031 is perpendicular to the insertion direction of the optical fiber patch cable plug 1 means approximately perpendicular, rather than absolutely perpendicular. Limited by a process and a material, the perpendicular herein has a specific tolerance.

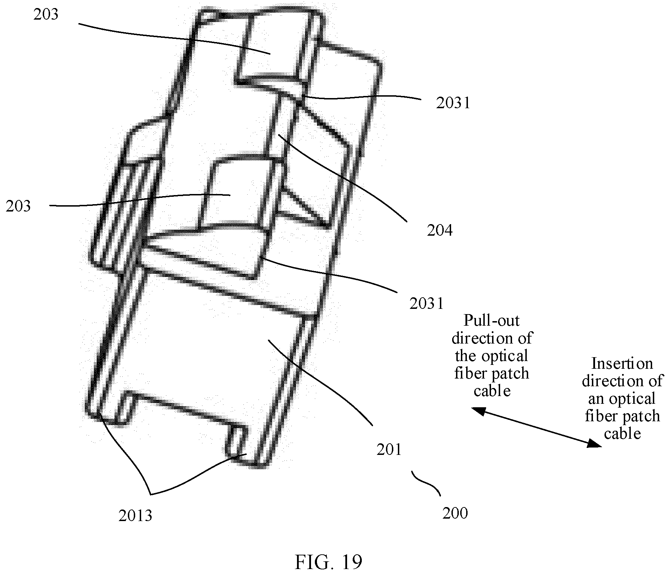

In some embodiments, refer to FIG. 15 and FIG. 19. The second tripping protrusion 204 is formed by the clamping component 201 protruding towards the plug-in port 101. A surface that is of the second tripping protrusion 204 and that faces the plug-in port 101 is a smooth curved surface. The function of preventing the optical fiber patch cable plug 1 from being pulled out does not need to be considered for the second tripping protrusion 204, as long as it is convenient for the insertion and the removal of the optical fiber patch cable plug 1, and convenient for cooperation between the second tripping protrusion 204 and the unlocking pull strap 13 of the optical fiber patch cable plug 1. In this way, when the unlocking pull strap 13 of the optical fiber patch cable plug 1 is pulled out, the second tripping protrusion 204 can be easily lifted, so that the entire clamping component 201 is lifted, and the clamping component 201 (namely, the second limiting portion 203) and the optical fiber patch cable plug 1 are unlocked.

It should be noted that, a specific shape and a size of the smooth surface may be flexibly set. For example, refer to FIG. 15 and FIG. 19. In the insertion direction of the optical fiber patch cable plug 1, a surface that is of the second limiting portion 203 and that faces the optical fiber patch cable plug 1 has two different shapes and structures. The surface shown in FIG. 15 has a larger curvature, a shorter distance, and a shorter unlocking stroke. The surface shown in FIG. 19 has a smaller curvature, a longer distance, and a longer unlocking stroke, but ensures smoother component movement.

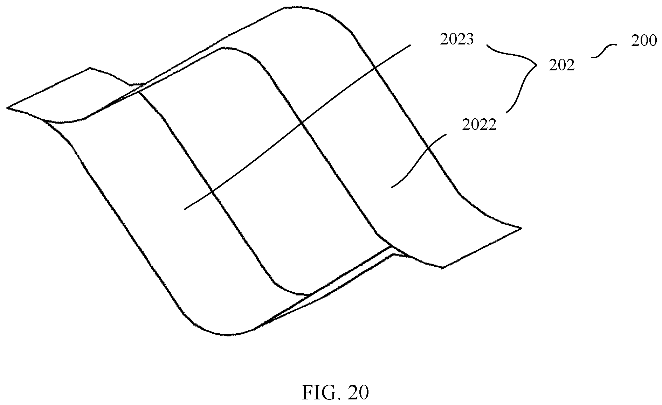

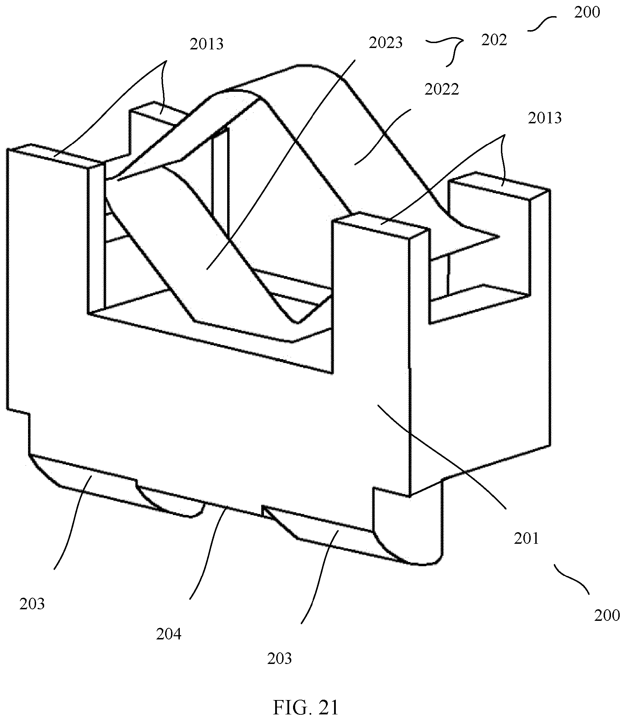

In some embodiments, the elastic component 202 is formed by two spring pieces, so that strength of the elastic component 202 can be enhanced, and a service life can be prolonged. Specifically, refer to FIG. 20. The elastic component 202 includes a first spring piece 2022 and a second spring piece 2023. Head ends and tail ends of the first spring piece 2022 and the second spring piece 2023 are all fixedly connected. A middle portion of the first spring piece 2022 and a middle portion of the second spring piece 2023 are disposed at an interval. Refer to FIG. 21. The middle portion of the first spring piece 2022 abuts against the side that is of the clamping component 201 and that is away from the plug-in port 101, and the middle portion of the second spring piece 2023 is fixed to the main body 100.

That the middle portion of the first spring piece 2022 and the middle portion of the second spring piece 2023 are disposed at an interval means that there is a gap between the middle portion of the first spring piece 2022 and the middle portion of the second spring piece 2023. The middle portions of the two spring pieces are disposed away from each other, to form deformation space and obtain better elastic deformation force.

Refer to FIG. 21. To facilitate cooperation between the clamping component 201 and the elastic component 202, a plurality of limiting rods 2013 are disposed on the clamping component 201, and the plurality of limiting rods 2013 are disposed corresponding to the head ends or the tail ends of the first spring piece 2022 and the second spring piece 2023, and are configured to limit a position of the elastic component 202. The plurality of limiting rods 2013 are disposed on the clamping component 201. Some of the limiting rods 2013 are used to limit a head end of the elastic component 202, and some of the limiting rods 2013 are used to limit a tail end of the elastic component 202. The plurality of limiting rods 2013 are disposed, so that the head end or the tail end of the elastic component 202 is limited, by the limiting rods 2013, to a corresponding position of the clamping component 201, to prevent the elastic component 202 from being misplaced in a deformation process.

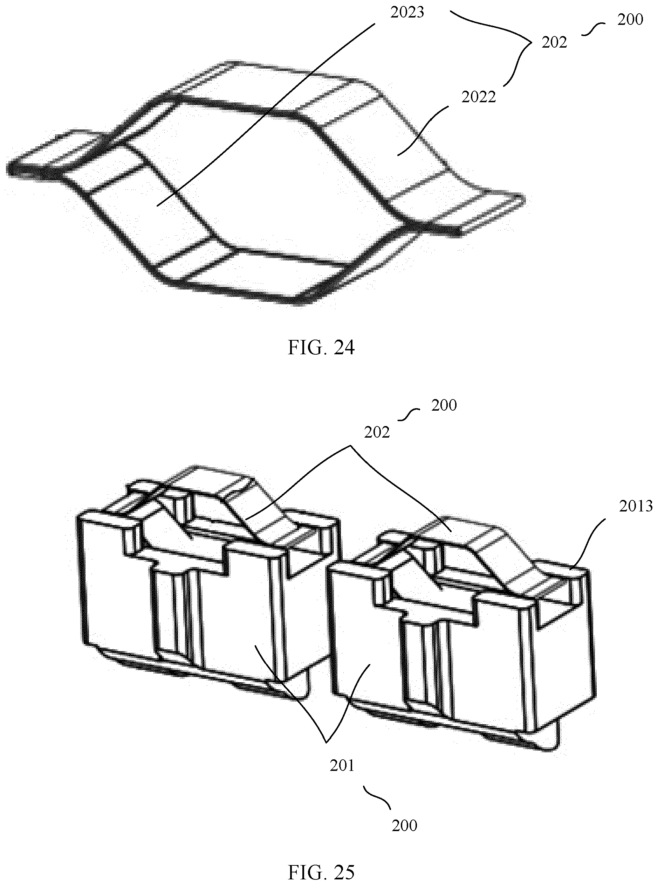

It should be noted that, the shape and the structure of the elastic component 202 formed by the first spring piece 2022 and the second spring piece 2023 can be implemented in a plurality of manners based on an actual requirement. For example, refer to FIG. 20. The middle portions of the first spring piece 2022 and the middle portion of the second spring piece 2023 are both natural curves. Alternatively, refer to FIG. 24. The middle portions of the first spring piece 2022 and the second spring piece 2023 each have an abutting plane.

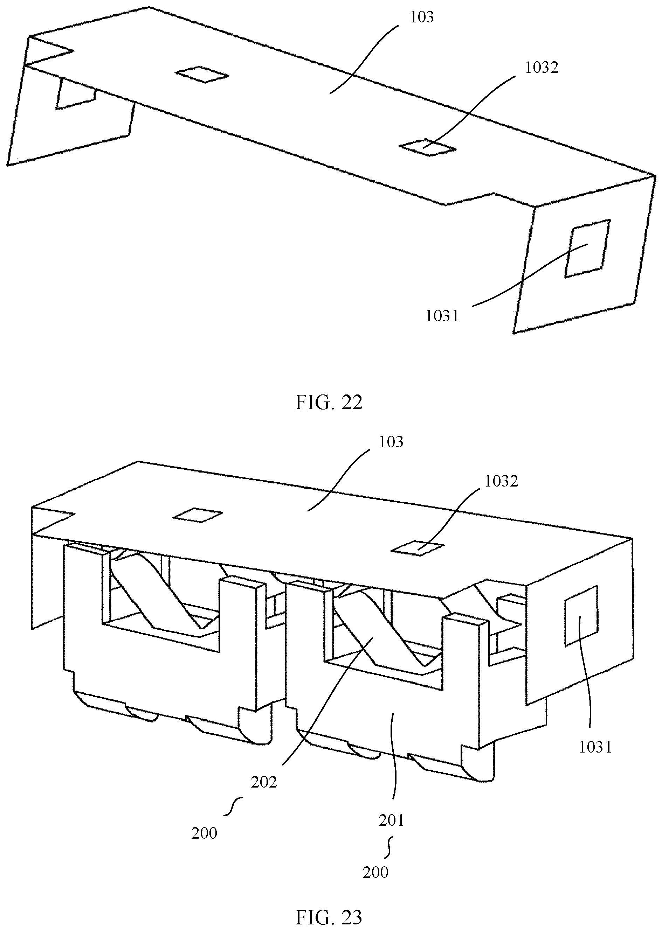

Refer to FIG. 20, FIG. 22, and FIG. 23. Relative displacement may occur when the middle portions of the first spring piece 2022 and the second spring piece 2023 abut against the corresponding positions. Especially, when the middle portion of the first spring piece 2022 cooperates with the cover plate 103, if there is no other structure in the corresponding position of the cover plate 103, relative displacement may easily occur between the middle portion of the first spring piece 2022 and the cover plate 103. Therefore, to locate a relative position between the middle portion of the first spring piece 2022 and the cover plate 103, a positioning hole 1032 is provided in the middle portion of the cover plate 103 corresponding to the first spring piece 2022. Refer to FIG. 22 and FIG. 23. In this way, a protruding curved vertex in the middle portion of the first spring piece 2022 may extend into the positioning hole 1032, to fix the relative position between the middle portion of the first spring piece 2022 and the cover plate 103.

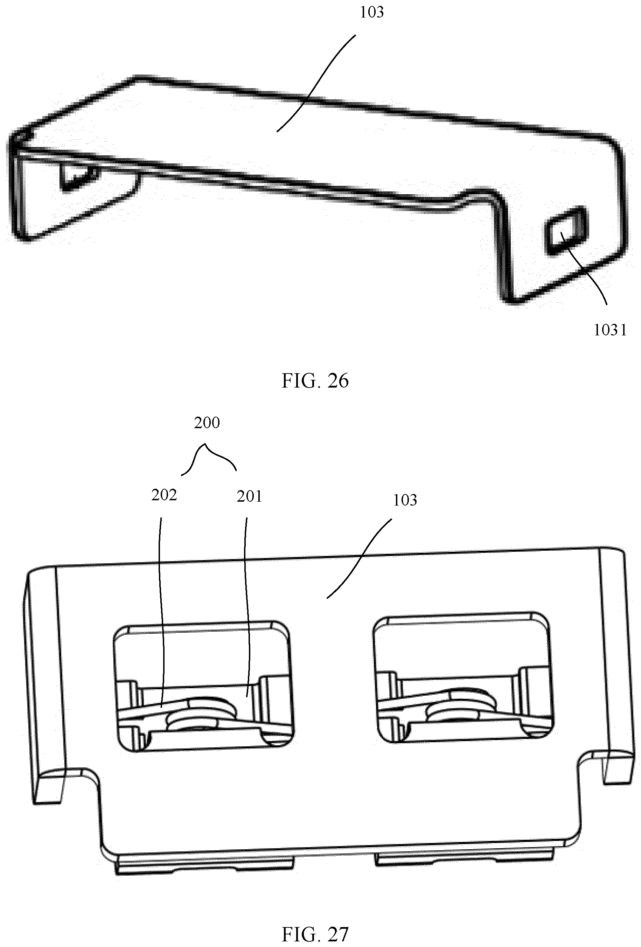

Refer to FIG. 24. The middle portions of the first spring piece 2022 and the second spring piece 2023 each have an abutting plane. In this way, the middle portion of the second spring piece 2023 may adapt to the clamping component 201. Refer to FIG. 25. The middle portion of the first spring piece 2022 may adapt to the cover plate 103. Refer to FIG. 26. No other structure needs to be disposed at a corresponding position of the cover plate 103. The two planes abut against and cooperate with each other, so that frictional force is large. This can ensure that the relative position between the middle portion of the first spring piece 2022 and the cover plate 103 is fixed.

The elastic component 202 may be customized based on specific needs, or may be conventional elastic parts, convenient to purchase and implement. For example, the elastic component 202 may be a spring, a torsion spring, or a plate spring. For example, refer to FIG. 27. The elastic component 202 is a torsion spring.

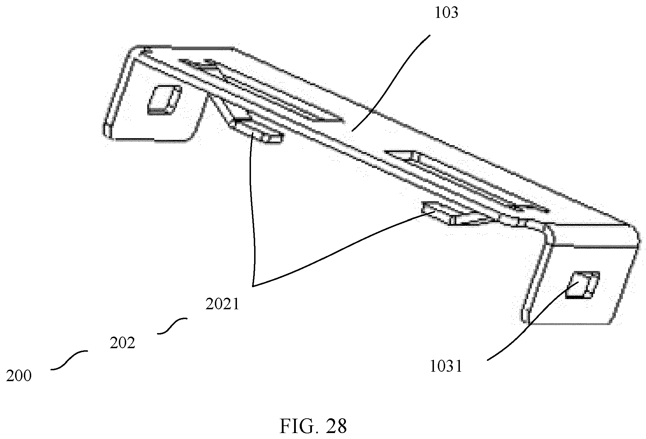

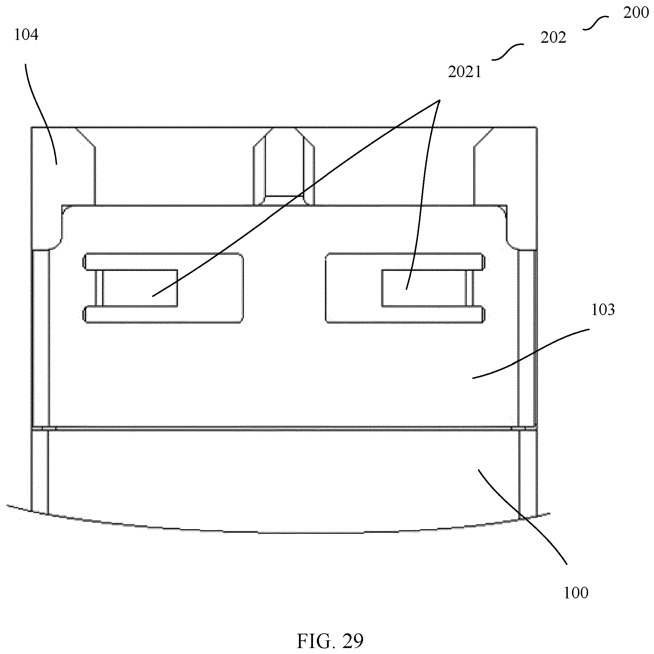

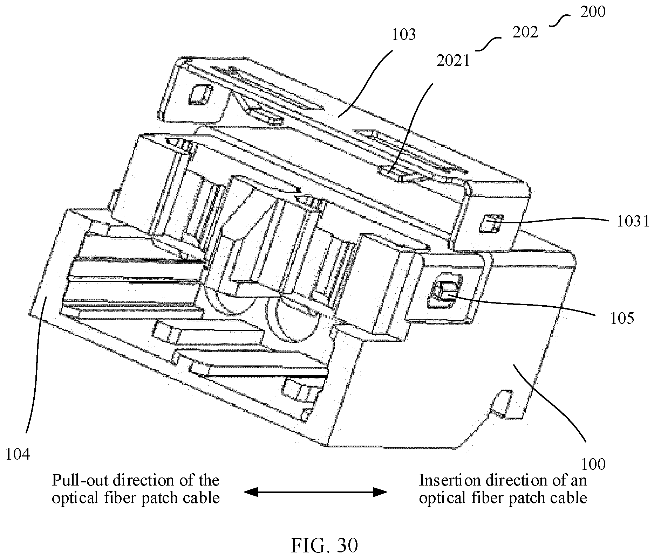

In some embodiments, for ease of implementation and manufacturing, the elastic component 202 may be integrated onto the cover plate 103. For example, refer to FIG. 28, and FIG. 29. The cover plate 103 is a sheet metal part. The elastic component 202 is a bent elastic piece 2021 on the cover plate 103. The bent elastic piece 2021 is bent towards the plug-in port 101 (not shown in the figure) and abuts against the clamping component 201 (not shown in the figure). In this way, the elastic component 202 is a bent elastic piece 2021 formed by bending on the cover plate 103. Refer to FIG. 30. The bent elastic piece 2021 is bent towards the plug-in port 101 (not shown in the figure) and can abut against the clamping component 201 (not shown in the figure), to apply retention force towards the plug-in port 101 to the clamping component 201.

Based on the solution in which the elastic component 202 is the bent elastic piece 2021 formed by bending on the cover plate 103, to limit a relative position between the bent elastic piece 2021 and the clamping component 201, an elastic piece limiting groove 205 is provided on a side that is of the clamping component 201 and that faces the bent elastic piece 2021 (where the elastic piece limiting groove 205 in Embodiment 2 is also applicable to the solution in which the elastic component 202 is formed by the first spring piece 2022 and the second spring piece 2023). Refer to FIG. 14. In this way, the end portion of the bent elastic piece 2021 may extend into the elastic piece limiting groove 205, and a position of the bent elastic piece 2021 on the clamping component 201 can be limited, to prevent the bent elastic piece 2021 from being misplaced with the clamping component 201 in a bending elastic deformation process.

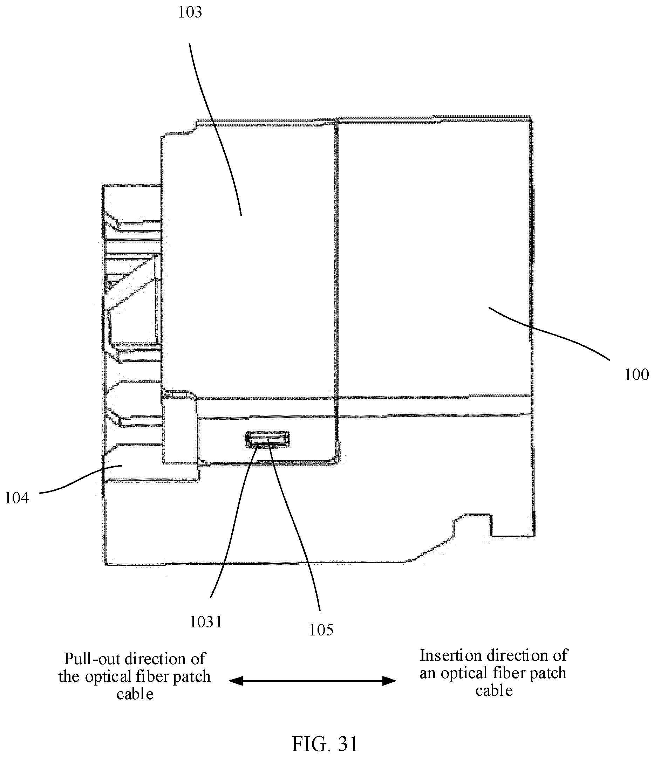

The cover plate 103 and the main body 100 may be fastened together, and this can be implemented through a clamping structure. For example, refer to FIG. 30 and FIG. 31. A clamping hole 1031 is provided on the cover plate 103, and a clamping protrusion 105 is disposed on the main body 100. The cover plate 103 and the main body 100 can be fastened by clamping the clamping protrusion 105 into the clamping hole 1031.

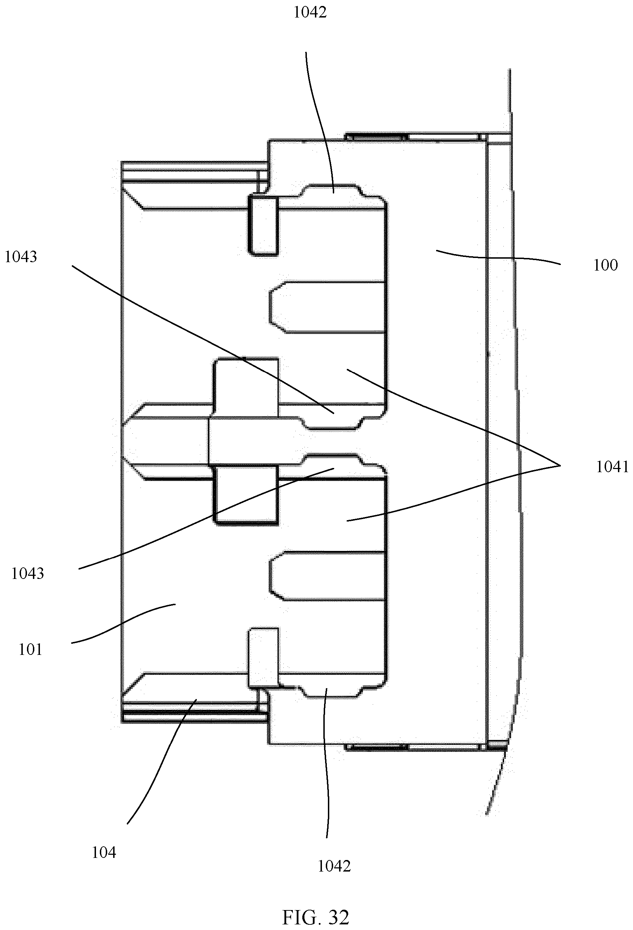

The clamping component 201 moves in the radial direction of the plug-in port 101, and correspondingly, the main body 100 also needs to be disposed to cooperate with the movement of the clamping component 201 in the radial direction of the plug-in port 101. For example, refer to FIG. 32. A second bearing frame 104 corresponding to the clamping component 201 is disposed in the main body 100. A guide groove 1041 provided in the radial direction of the plug-in port 101 is provided on the second bearing frame 104. The clamping component 201 is disposed in the guide groove 1041. The second bearing frame 104 is disposed, the guide groove 1041 is provided on the second bearing frame 104, and the clamping component 201 may move in the radial direction of the plug-in port 101 in the guide groove 1041.

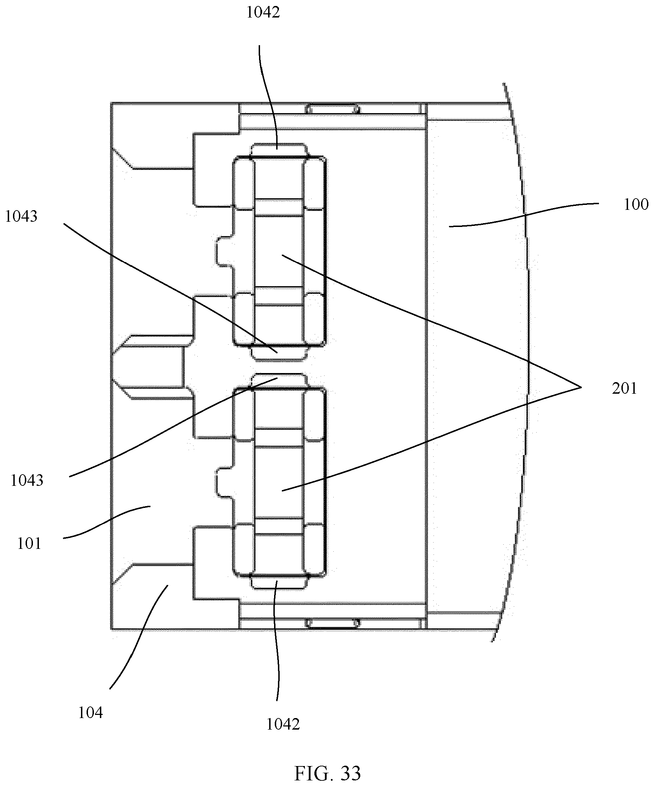

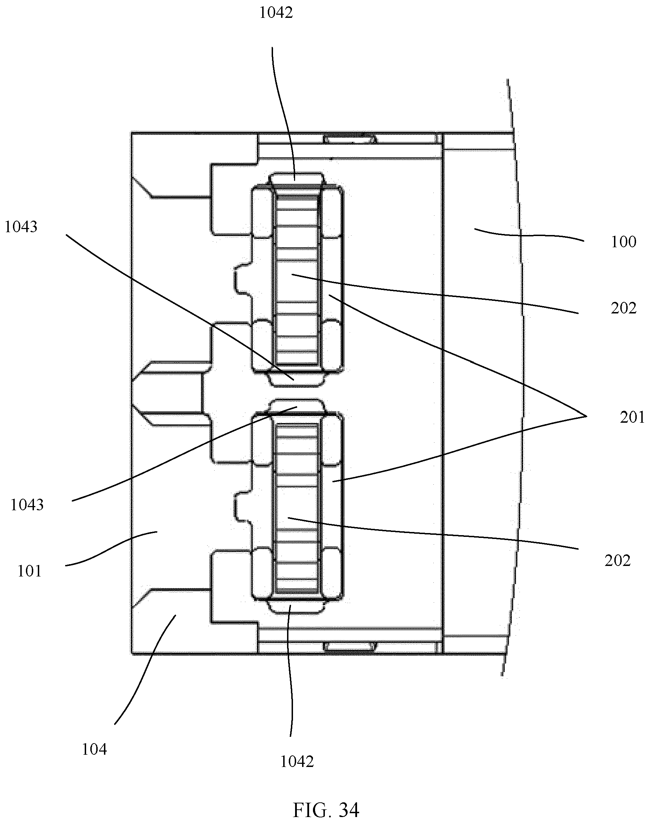

To enable the second bearing frame 104 to bear the clamping component 201, refer to FIG. 32, a third bearing groove 1042 and a fourth bearing groove 1043 are provided on the second bearing frame 104. Refer to FIG. 33. Two opposite edges of the clamping component 201 respectively extend into the third bearing groove 1042 and the fourth bearing groove 1043, so that the clamping component 201 is assembled in the second bearing frame 104. Further, FIG. 34 shows a top view of a structure in which the elastic component 202 is assembled in the clamping component 201.

## Claims

1. An optical fiber interface (2), comprising:
a main body (100), wherein a plug-in port (101) for insertion is disposed on the main body (100), and the plug-in port (101) is configured to accommodate an inserted optical fiber patch cable plug (1);
a cover plate (103), wherein the cover plate (103) is disposed above the main body (100) and is fixed to the main body (100); and
a clamping unlocking mechanism (200), wherein the clamping unlocking mechanism (200) is disposed between the plug-in port (101) and the cover plate (103) and comprises a clamping component (201) and an elastic component (202), the clamping component (201) is disposed in a radial direction of the plug-in port (101) and is configured to clamp the optical fiber patch cable plug (1) when the optical fiber patch cable plug (1) is inserted into the plug-in port (101), and the elastic component (202) is configured to apply elastic force towards the optical fiber patch cable plug (1) to the clamping component (201),
**characterized in that** the clamping component (201) is rotatably connected to the main body (100), and the clamping component (201) is further configured to rotate in a direction away from the plug-in port (101) when the optical fiber patch cable plug (1) is inserted into the plug-in port (101).

2. The optical fiber interface (2) according to claim 1, wherein the elastic component (202) is disposed on a side that is of the clamping component (201) and that is away from the plug-in port (101), and the elastic component (202) is in a compressed state, to apply the elastic force towards the optical fiber patch cable plug (1) to the clamping component (201).

3. The optical fiber interface (2) according to claim 1 or 2, wherein the clamping component (201) comprises a first rotating member (2011) and a second rotating member (2012) that are rotatably connected to the main body (100), the first rotating member (2011) overlaps a side that is of the second rotating member (2012) and that is away from the plug-in port (101), the first rotating member (2011) comprises a first limiting portion (20111), and the first limiting portion (20111) is configured to prevent the optical fiber patch cable plug (1) from being pulled out; and the second rotating member (2012) is provided with a first tripping protrusion (20121), and the first tripping protrusion (20121) is configured to cooperate with an unlocking pull strap (13) of the optical fiber patch cable plug (1) when the unlocking pull strap (13) of the optical fiber patch cable plug (1) is pulled, so that the second rotating member (2012) rotates towards the side away from the plug-in port (101).

4. The optical fiber interface (2) according to claim 3, wherein a rotation axis of the first rotating member (2011) and a rotation axis of the second rotating member (2012) are parallel, the first rotating member (2011) and the second rotating member (2012) each are rotatably connected to the main body (100) through an end portion, another end of the first rotating member (2011) and another end of the second rotating member (2012) are both free ends, and the free end of the first rotating member (2011) overlaps a side that is of the free end of the second rotating member (2012) and that is away from the plug-in port (101).

5. The optical fiber interface (2) according to claim 4, wherein the clamping unlocking mechanism (200) comprises a first bearing frame (102) disposed in the radial direction of the plug-in port (101), the first rotating member (2011) and the second rotating member (2012) are mounted on the first bearing frame (102), the first bearing frame (102) comprises a hollow portion (1021), and the first limiting portion (20111) and the first tripping protrusion (20121) are located at the hollow portion (1021).

6. The optical fiber interface (2) according to claim 5, wherein a first bearing groove (1022) and a second bearing groove (1023) are provided on the first bearing frame (102), a side wall of the first rotating member (2011) comprises a first bearing protrusion (20112), and a side wall of the second rotating member (2012) comprises a second bearing protrusion (20122); and
the first bearing protrusion (20112) correspondingly extends into the first bearing groove (1022), to limit movement of the first rotating member (2011) towards the plug-in port (101); and the second bearing protrusion (20122)correspondingly extends into the second bearing groove (1023), to limit movement of the second rotating member (2012) towards the plug-in port (101).

7. The optical fiber interface (2) according to any one of claims 3 to 6, wherein there are two first rotating members (2011) and two second rotating members (2012), the two first rotating members (2011) are disposed abreast, and the two second rotating members (2012) are disposed abreast.

8. The optical fiber interface (2) according to one of the claims 1 to 7, wherein the clamping component (201) is a movable member that can move in the radial direction of the plug-in port (101).

9. The optical fiber interface (2) according to claim 8, wherein a second limiting portion (203) and a second tripping protrusion (204) are disposed on a side that is of the clamping component (201) and that faces the plug-in port (101), the second limiting portion (203) is configured to prevent the optical fiber patch cable plug (1) from being pulled out, and the second tripping protrusion (204) is configured to cooperate with an unlocking pull strap (13) of the optical fiber patch cable plug (1) when the unlocking pull strap (13) of the optical fiber patch cable plug (1) is pulled, so that the clamping component (201) moves towards the side away from the plug-in port (101).

10. The optical fiber interface (2) according to claim 9, wherein the clamping component (201) protrudes towards the plug-in port (101) to form the second limiting portion; in an insertion direction of the optical fiber patch cable plug (1), a surface of a side that is of the second limiting portion (203) and that faces the optical fiber patch cable plug (1) is a smooth curved surface, and a side that is of the second limiting portion (203) and that is away from the optical fiber patch cable plug (1) comprises a stop surface (2031); and the stop surface (2031) is perpendicular to the insertion direction of the optical fiber patch cable plug (1), and the stop surface (2031) is configured to cooperate with a corresponding structure of the optical fiber patch cable plug (1), to prevent the optical fiber patch cable plug (1) from being pulled out.

11. The optical fiber interface (2) according to claim 9 or 10, wherein a surface that is of the second tripping protrusion (204) and that faces the plug-in port (101) is a smooth curved surface.

12. The optical fiber interface (2) according to any one of claims 8 to 11, wherein the elastic component (202) comprises a first spring piece (2022) and a second spring piece (2023), head ends and tail ends of the first spring piece (2022) and the second spring piece (2023) are all fixedly connected, and a middle portion of the first spring piece (2022) and a middle portion of the second spring piece (2023) are disposed at an interval; and
the middle portion of the first spring piece (2022) abuts against the side that is of the clamping component (201) and that is away from the plug-in port (101), and the middle portion of the second spring piece (2023) is fixed to the main body (100).

13. An optical module, comprising an optoelectronic device, a functional circuit, and an optical fiber interface (2) according to any one of claims 1 to 12, wherein the optical fiber interface (2) is configured to connect to an optical fiber patch cable plug (1).

14. A communication device, provided with the optical module according to claim 13.

## Patentansprüche

1. Faseroptische Schnittstelle (2), umfassend:
einen Hauptkörper (100), wobei ein Steckanschluss (101) zum Einstecken an dem Hauptkörper (100) angeordnet ist und der Steckanschluss (101) dazu konfiguriert ist, einen eingesteckten Stecker (1) des faseroptischen Patchkabels aufzunehmen;
eine Abdeckplatte (103), wobei die Abdeckplatte (103) über dem Hauptkörper (100) angeordnet ist und an dem Hauptkörper (100) befestigt ist; und
einen Klemm-/Entriegelungsmechanismus (200), wobei der Klemm-/Entriegelungsmechanismus (200) zwischen dem Steckanschluss (101) und der Abdeckplatte (103) angeordnet ist und ein Klemmelement (201) und ein elastisches Element (202) umfasst, wobei das Klemmelement (201) in einer radialen Richtung des Steckanschlusses (101) angeordnet ist und dazu konfiguriert ist, den Stecker (1) des faseroptischen Patchkabels festzuklemmen, wenn der Stecker (1) des faseroptischen Patchkabels in den Steckanschluss (101) eingesteckt wird, und das elastische Element (202) dazu konfiguriert ist, eine elastische Kraft in Richtung des Steckers (1) des faseroptischen Patchkabels auf das Klemmelement (201) auszuüben,
**dadurch gekennzeichnet, dass**
das Klemmelement (201) drehbar mit dem Hauptkörper (100) verbunden ist und das Klemmelements (201) ferner dazu konfiguriert ist, sich in eine Richtung weg von dem Steckanschluss (101) zu drehen, wenn der Stecker (1) des faseroptischen Patchkabels in den Steckanschluss (101) eingesteckt wird.

2. Faseroptische Schnittstelle (2) nach Anspruch 1, wobei das elastische Element (202) auf einer Seite, die zu dem Klemmelement (201) gehört und die dem Steckanschluss (101) abgewandt ist, angeordnet ist und sich das elastische Element (202) in einem komprimierten Zustand befindet, um die elastische Kraft in Richtung des Steckers (1) des faseroptischen Patchkabels auf das Klemmelement (201) auszuüben.

3. Faseroptische Schnittstelle (2) nach Anspruch 1 oder 2, wobei das Klemmelement (201) ein erstes Drehteil (2011) und ein zweites Drehteil (2012) umfasst, die drehbar mit dem Hauptkörper (100) verbunden sind, das erste Drehteil (2011) eine Seite überlappt, die zu dem zweiten Drehteil (2012) gehört und die dem Steckanschluss (101) abgewandt ist, das erste Drehteil (2011) einen ersten Begrenzungsabschnitt (20111) umfasst und der erste Begrenzungsabschnitt (20111) dazu konfiguriert ist, ein Herausziehen des Steckers (1) des faseroptischen Patchkabels zu verhindern; und das zweite Drehteil (2012) mit einem ersten Auslösevorsprung (20121) versehen ist und der erste Auslösevorsprung (20121) dazu konfiguriert ist, mit einer Entriegelungs-Zuglasche (13) des Steckers (1) des faseroptischen Patchkabels zusammenzuwirken, wenn an der Entriegelungs-Zuglasche (13) des Steckers (1) des faseroptischen Patchkabels gezogen wird, sodass sich das zweite Drehteil (2012) in Richtung der Seite, die dem Steckanschluss (101) abgewandt ist, dreht.

4. Faseroptische Schnittstelle (2) nach Anspruch 3, wobei eine Drehachse des ersten Drehteils (2011) und eine Drehachse des zweiten Drehteils (2012) parallel sind, das erste Drehteil (2011) und das zweite Drehteil (2012) jeweils über einen Endabschnitt drehbar mit dem Hauptkörper (100) verbunden sind, ein anderes Ende des ersten Drehteils (2011) und ein anderes Ende des zweiten Drehteils (2012) beide freie Enden sind und das freie Ende des ersten Drehteils (2011) eine Seite überlappt, die zu dem freien Ende des zweiten Drehteils (2012) gehört und die dem Steckanschluss (101) abgewandt ist.

5. Faseroptische Schnittstelle (2) nach Anspruch 4, wobei der Klemm-/Entriegelungsmechanismus (200) einen ersten Lagerrahmen (102) umfasst, der in der radialen Richtung des Steckanschlusses (101) angeordnet ist, das erste Drehteil (2011) und das zweite Drehteil (2012) auf dem ersten Lagerrahmen (102) montiert sind, der erste Lagerrahmen (102) einen hohlen Abschnitt (1021) umfasst und sich der erste Begrenzungsabschnitt (20111) und der erste Auslösevorsprung (20121) an dem hohlen Abschnitt (1021) befinden.

6. Faseroptische Schnittstelle (2) nach Anspruch 5, wobei eine erste Lagernut (1022) und eine zweite Lagernut (1023) an dem ersten Lagerrahmen (102) vorgesehen sind, eine Seitenwand des ersten Drehteils (2011) einen ersten Lagervorsprung (20112) aufweist und eine Seitenwand des zweiten Drehteils (2012) einen zweiten Lagervorsprung (20122) umfasst; und
sich der erste Lagervorsprung (20112) entsprechend in die erste Lagernut (1022) erstreckt, um eine Bewegung des ersten Drehteils (2011) in Richtung des Steckanschlusses (101) zu begrenzen; und sich der zweite Lagervorsprung (20122) entsprechend in die zweite Lagernut (1023) erstreckt, um eine Bewegung des zweiten Drehteils (2012) in Richtung des Steckanschlusses (101) zu begrenzen.

7. Faseroptische Schnittstelle (2) nach einem der Ansprüche 3 bis 6, wobei zwei erste Drehteile (2011) und zwei zweite Drehteile (2012) vorhanden sind, die beiden ersten Drehteile (2011) nebeneinander angeordnet sind und die beiden zweiten Drehteile (2012) nebeneinander angeordnet sind.

8. Faseroptische Schnittstelle (2) nach einem der Ansprüche 1 bis 7, wobei das Klemmelement (201) ein bewegliches Teil ist, das sich in der radialen Richtung des Steckanschlusses (101) bewegen kann.

9. Faseroptische Schnittstelle (2) nach Anspruch 8, wobei ein zweiter Begrenzungsabschnitt (203) und ein zweiter Auslösevorsprung (204) auf einer Seite, die zu dem Klemmelement (201) gehört und die dem Steckanschluss (101) zugewandt ist, angeordnet sind, wobei der zweite Begrenzungsabschnitt (203) dazu konfiguriert ist, ein Herausziehen des Steckers (1) des faseroptischen Patchkabels zu verhindern, und der zweite Auslösevorsprung (204) dazu konfiguriert ist, mit einer Entriegelungs-Zuglasche (13) des Steckers (1) des faseroptischen Patchkabels zusammenzuwirken, wenn an der Entriegelungs-Zuglasche (13) des Steckers (1) des faseroptischen Patchkabels gezogen wird, sodass sich das Klemmelement (201) zu der Seite, die dem Steckanschluss (101) abgewandt ist, bewegt.

10. Faseroptische Schnittstelle (2) nach Anspruch 9, wobei das Klemmelement (201) in Richtung des Steckanschlusses (101) vorsteht, um den zweiten Begrenzungsabschnitt zu bilden; in einer Einsteckrichtung des Steckers (1) des faseroptischen Patchkabels eine Fläche einer Seite, die zu dem zweiten Begrenzungsabschnitt (203) gehört und die dem Stecker (1) des faseroptischen Patchkabels zugewandt ist, eine glatte, gekrümmte Fläche ist und eine Seite, die zu dem zweiten Begrenzungsabschnitt (203) gehört und die dem Stecker (1) des faseroptischen Patchkabels abgewandt ist, eine Anschlagfläche (2031) aufweist; und die Anschlagfläche (2031) senkrecht zu der Einsteckrichtung des Steckers (1) des faseroptischen Patchkabels verläuft und die Anschlagfläche (2031) dazu konfiguriert ist, mit einer entsprechenden Struktur des Steckers (1) des faseroptischen Patchkabels zusammenzuwirken, um ein Herausziehen des Steckers (1) des faseroptischen Patchkabels zu verhindern.

11. Faseroptische Schnittstelle (2) nach Anspruch 9 oder 10, wobei eine Fläche, die zu dem zweiten Auslösevorsprung (204) gehört und die dem Steckanschluss (101) zugewandt ist, eine glatte, gekrümmte Fläche ist.

12. Faseroptische Schnittstelle (2) nach einem der Ansprüche 8 bis 11, wobei das elastische Element (202) ein erstes Federstück (2022) und ein zweites Federstück (2023) umfasst, Kopfenden und Schwanzenden des ersten Federstücks (2022) und des zweiten Federstücks (2023) alle fest miteinander verbunden sind und ein Mittelabschnitt des ersten Federstücks (2022) und ein Mittelabschnitt des zweiten Federstücks (2023) in einem Abstand angeordnet sind; und
der Mittelabschnitt des ersten Federstücks (2022) an der Seite, die zu dem Klemmelement (201) gehört und die dem Steckanschluss (101) abgewandt ist, anliegt und der Mittelabschnitt des zweiten Federstücks (2023) an dem Hauptkörper (100) befestigt ist.

13. Optisches Modul, umfassend eine optoelektronische Vorrichtung, eine Funktionsschaltung und eine faseroptische Schnittstelle (2) nach einem der Ansprüche 1 bis 12, wobei die faseroptische Schnittstelle (2) dazu konfiguriert ist, mit einem Stecker (1) des faseroptischen Patchkabels verbunden zu werden.

14. Kommunikationsvorrichtung, die mit dem optischen Modul nach Anspruch 13 versehen ist.

## Revendications

1. Interface de fibre optique (2), comprenant :
un corps principal (100), dans laquelle un port enfichable (101) pour l'insertion est disposé sur le corps principal (100), et le port enfichable (101) est configuré pour accueillir une fiche de câble de raccordement à fibre optique insérée (1) ;
une plaque de recouvrement (103), dans laquelle la plaque de recouvrement (103) est disposée au-dessus du corps principal (100) et est fixée au corps principal (100) ; et
un mécanisme de déverrouillage de serrage (200), dans laquelle le mécanisme de déverrouillage de serrage (200) est disposé entre le port enfichable (101) et la plaque de recouvrement (103) et comprend un composant de serrage (201) et un composant élastique (202), le composant de serrage (201) est disposé dans une direction radiale du port enfichable (101) et est configuré pour serrer la fiche de câble de raccordement à fibre optique (1) lorsque la fiche de câble de raccordement à fibre optique (1) est insérée dans le port enfichable (101), et le composant élastique (202) est configuré pour appliquer une force élastique vers la fiche de câble de raccordement à fibre optique (1) sur le composant de serrage (201),
**caractérisée en ce que**
le composant de serrage (201) est relié de manière rotative au corps principal (100), et le composant de serrage (201) est également configuré pour tourner dans une direction éloignée du port enfichable (101) lorsque la fiche de câble de raccordement à fibre optique (1) est insérée dans le port enfichable (101).

2. Interface de fibre optique (2) selon la revendication 1, dans laquelle le composant élastique (202) est disposé sur un côté qui est celui du composant de serrage (201) et qui est éloigné du port enfichable (101), et le composant élastique (202) est dans un état comprimé, pour appliquer la force élastique vers la fiche de câble de raccordement de fibre optique (1) sur le composant de serrage (201).

3. Interface de fibre optique (2) selon la revendication 1 ou 2, dans laquelle le composant de serrage (201) comprend un premier élément rotatif (2011) et un second élément rotatif (2012) reliés de manière rotative au corps principal (100), le premier élément rotatif (2011) chevauche un côté qui est celui du second élément rotatif (2012) et qui est éloigné du port enfichable (101), le premier élément rotatif (2011) comprend une première partie de limitation (20111), et la première partie de limitation (20111) est configurée pour empêcher l'extraction de la fiche de câble de raccordement de fibre optique (1) ; et le second élément rotatif (2012) est pourvu d'une première saillie de déclenchement (20121), et la première saillie de déclenchement (20121) est configurée pour coopérer avec une sangle de traction de déverrouillage (13) de la fiche de câble de raccordement à fibre optique (1) lorsque la sangle de traction de déverrouillage (13) de la fiche de câble de raccordement à fibre optique (1) est tirée, de sorte que le second élément rotatif (2012) tourne vers le côté éloigné du port enfichable (101).

4. Interface de fibre optique (2) selon la revendication 3, dans laquelle un axe de rotation du premier élément rotatif (2011) et un axe de rotation du second élément rotatif (2012) sont parallèles, le premier élément rotatif (2011) et le second élément rotatif (2012) sont chacun reliés de manière rotative au corps principal (100) par l'intermédiaire d'une partie d'extrémité, une autre extrémité du premier élément rotatif (2011) et une autre extrémité du second élément rotatif (2012) sont toutes deux des extrémités libres, et l'extrémité libre du premier élément rotatif (2011) chevauche un côté qui est celui de l'extrémité libre du second élément rotatif (2012) et qui est éloigné du port enfichable (101).

5. Interface de fibre optique (2) selon la revendication 4, dans laquelle le mécanisme de déverrouillage de serrage (200) comprend un premier cadre de support (102) disposé dans la direction radiale du port enfichable (101), le premier élément rotatif (2011) et le second élément rotatif (2012) sont montés sur le premier cadre de support (102), le premier cadre de support (102) comprend une partie creuse (1021), et la première partie de limitation (20111) et la première saillie de déclenchement (20121) sont situées au niveau de la partie creuse (1021).

6. Interface de fibre optique (2) selon la revendication 5, dans laquelle une première rainure de palier (1022) et une seconde rainure de palier (1023) sont pourvues sur le premier cadre de support (102), une paroi latérale du premier élément rotatif (2011) comprend une première saillie de palier (20112), et une paroi latérale du second élément rotatif (2012) comprend une seconde saillie de palier (20122) ; et
la première saillie de palier (20112) se prolonge de manière correspondante dans la première rainure de palier (1022), pour limiter le mouvement du premier élément rotatif (2011) vers le port enfichable (101) ; et la seconde saillie de palier (20122) se prolonge de manière correspondante dans la seconde rainure de palier (1023), pour limiter le mouvement du second élément rotatif (2012) vers le port enfichable (101).

7. Interface de fibre optique (2) selon l'une quelconque des revendications 3 à 6, dans laquelle il existe deux premiers éléments rotatifs (2011) et deux seconds éléments rotatifs (2012), les deux premiers éléments rotatifs (2011) sont disposés côte à côte, et les deux seconds éléments rotatifs (2012) sont disposés côte à côte.

8. Interface de fibre optique (2) selon l'une des revendications 1 à 7, dans laquelle le composant de serrage (201) est un élément mobile qui peut se déplacer dans la direction radiale du port enfichable (101).

9. Interface de fibre optique (2) selon la revendication 8, dans laquelle une seconde partie de limitation (203) et une seconde saillie de déclenchement (204) sont disposées sur un côté qui est celui du composant de serrage (201) et qui fait face au port enfichable (101), la seconde partie de limitation (203) est configurée pour empêcher l'extraction de la fiche de câble de raccordement de fibre optique (1), et la seconde saillie de déclenchement (204) est configurée pour coopérer avec une sangle de traction de déverrouillage (13) de la fiche de câble de raccordement de fibre optique (1) lorsque la sangle de traction de déverrouillage (13) de la fiche de câble de raccordement de fibre optique (1) est tirée, de sorte que le composant de serrage (201) se déplace vers le côté éloigné du port enfichable (101).

10. Interface de fibre optique (2) selon la revendication 9, dans laquelle le composant de serrage (201) fait saillie vers le port enfichable (101) pour former la seconde partie de limitation ; dans une direction d'insertion de la fiche de câble de raccordement de fibre optique (1), une surface d'un côté qui est celui de la seconde partie de limitation (203) faisant face à la fiche de câble de raccordement de fibre optique (1) est une surface incurvée lisse, et un côté qui est celui de la seconde partie de limitation (203) et qui est éloigné de la fiche de câble de raccordement de fibre optique (1) comprend une surface d'arrêt (2031) ; et la surface d'arrêt (2031) est perpendiculaire à la direction d'insertion de la fiche de câble de raccordement de fibre optique (1), et la surface d'arrêt (2031) est configurée pour coopérer avec une structure correspondante de la fiche de câble de raccordement de fibre optique (1), afin d'empêcher l'extraction de la fiche de câble de raccordement de fibre optique (1).

11. Interface de fibre optique (2) selon la revendication 9 ou 10, dans laquelle une surface qui est celle de la seconde saillie de déclenchement (204) et qui fait face au port enfichable (101) est une surface incurvée lisse.

12. Interface de fibre optique (2) selon l'une quelconque des revendications 8 à 11, dans laquelle le composant élastique (202) comprend une première pièce de ressort (2022) et une seconde pièce de ressort (2023), les extrémités de tête et les extrémités de queue de la première pièce de ressort (2022) et de la seconde pièce de ressort (2023) sont toutes connectées de manière fixe, et une partie médiane de la première pièce de ressort (2022) et une partie médiane de la seconde pièce de ressort (2023) sont disposées à un intervalle ; et
la partie médiane de la première pièce de ressort (2022) vient en butée contre le côté qui est celui du composant de serrage (201) et qui est éloigné du port enfichable (101), et la partie médiane de la seconde pièce de ressort (2023) est fixée au corps principal (100).

13. Module optique, comprenant un dispositif optoélectronique, un circuit fonctionnel, et une interface de fibre optique (2) selon l'une quelconque des revendications 1 à 12, dans lequel l'interface de fibre optique (2) est configurée pour se connecter à une fiche de câble de raccordement de fibre optique (1).

14. Dispositif de communication, pourvu du module optique selon la revendication 13.
